(19) **Europäisches Patentamt / European Patent Office / Office européen des brevets**

(11) **EP 1 942 435 A1**

(12) **EUROPEAN PATENT APPLICATION**
published in accordance with Art. 153(4) EPC

(43) Date of publication:
**09.07.2008 Bulletin 2008/28**

(21) Application number: **06821836.1**

(22) Date of filing: **11.10.2006**

(51) Int Cl.:
**G06F 21/24** (2006.01)   **G06T 7/00** (2006.01)

(86) International application number:
**PCT/JP2006/320339**

(87) International publication number:
**WO 2007/046289 (26.04.2007 Gazette 2007/17)**

(84) Designated Contracting States:
**DE FR GB**

(30) Priority: **18.10.2005 JP 2005303582**

(71) Applicant: **MATSUSHITA ELECTRIC INDUSTRIAL CO., LTD.**
**Osaka 571-8501 (JP)**

(72) Inventor: **ANBO, Masakado**
**c/o Matsushita Electric Industrial Co., Ltd.**
**Chuo-ku, Osaka-shi, Osaka, 540-6207 (JP)**

(74) Representative: **Pautex Schneider, Nicole**
**Véronique et al**
**Novagraaf International SA**
**25, avenue du Pailly**
**1220 Les Avanchets - Geneva (CH)**

(54) **INFORMATION PROCESSING DEVICE, AND METHOD THEREFOR**

(57)   To provide an information processing device that can perform highly accurate tampering detection of distinguishing between an alteration by an administrator and significant tampering. The information processing device acquires content from a web server in accordance with an acquisition request for the content by a browser terminal. The information processing device includes: a conversion unit (80) that converts the content to image information; an image information storage unit (84) that stores image information corresponding to the content; a similarity calculation unit (86) that calculates a degree of similarity between the image information obtained from the conversion unit (80) and the image information obtained from the image information storage unit (84); and a judgment unit (88) that judges whether or not the content has been tampered with, by comparing the degree of similarity with a preset threshold value.

FIG. 2

## Description

### Technical Field

The present invention relates to information processing devices, and particularly relates to information processing devices that detect tampering with content published on the Internet.

### Background Art

Many companies, organizations, and the like publish their websites on the Internet and transmit various information. Such websites are increasingly affected by tampering, that is, an act of an unauthorized person breaking into a server and altering the contents of a website.

Conventionally, a device that automatically detects tampering has been proposed (for example, see Patent Reference 1). This device compares a file size and an update date and time of a content file in a World Wide Web (WWW) server, with a file size and an update date and time of a content file stored in a database server. When the file size and update date and time of the content file in the web server match the file size and update date and time of the content file in the database server, the device judges that no tampering has been made. When at least one of the file size and update date and time of the content file in the web server does not match the file size and update date and time of the content file in the database server, the device judges that tampering has been made. Patent Reference 1: Japanese Patent Application Publication No. 2003-167786

### Disclosure of Invention

### Problems that Invention is to Solve

However, the conventional tampering detection method has the following problem. Since no distinction is made between different degrees of tampering, slight tampering and significant tampering that greatly changes a visual impression when viewing the content file are all simply judged as tampering. Which is to say, because the comparison between the content file in the web server and the content file in the database server is conducted based on the file size and the update date and time, even a slight alteration is judged as tampering when the update date and time of the content file changes.

An update by a website administrator (hereafter referred to as an "administrator") is usually a slight alteration. Besides, the administrator needs to know if significant tampering has occurred. Therefore, detecting a slight alteration actually hinders the administrator from performing efficient website maintenance.

Such detection of a slight alteration is not the only problem of the conventional tampering detection method. The conventional tampering detection method also has a problem of failing to detect significant tampering under a certain condition. That is, even when significant tampering has been made, the tampering cannot be detected if the file size and update date and time of the content file do not change.

The present invention was conceived to solve the above problems. The present invention aims to provide an information processing device that can detect tampering with content, by distinguishing between slight tampering and significant tampering depending on whether or not a visual impression when viewing the content is greatly changed.

Also, the present invention aims to provide an information processing device that can detect significant tampering unerringly, thereby improving a content tampering detection accuracy.

### Means to Solve the Problems

To achieve the above aims, an information processing device according to the present invention is an information processing device that detects tampering with content which is provided by a web server via the Internet, the information processing device including: a content acquisition unit that acquires the content from the web server, the content being written in a predetermined language; a conversion unit that converts the content acquired by the content acquisition unit, to image information that shows a characteristic of the content as an image; an image information storage unit in which image information obtained by performing the same conversion as the conversion unit on authorized content corresponding to the content is stored; an image information reading unit that reads the image information corresponding to the content acquired by the content acquisition unit, from the image information storage unit; and a tampering judgment unit that judges whether or not the content acquired from the web server has been tampered with, by comparing the image information generated by the conversion unit and the image information read by the image information reading unit.

The information processing device according to the present invention judges whether or not the content provided by the web server has been tampered with, by comparing the image information obtained from the content provided by the web server with the image information stored beforehand. The image information is a very important element for determining a person's impression of the content when viewing it in a browser terminal. This being so, by performing the comparison using the image information, the viewer's impression when viewing the content can be used as a basis for tampering detection. When tampering detection is performed based on the viewer's visual impression of the content, it is possible to distinguish between significant tampering that greatly changes the impression and slight tampering that hardly changes the impression. As a result, the tampering detection accuracy can be improved.

Preferably, the tampering judgment unit may include: a similarity calculation unit that calculates a degree of similarity between the image information generated by the conversion unit and the image information read by the image information reading unit; and a judgment unit that judges whether or not the content acquired from the web server has been tampered with, based on a result of comparing the degree of similarity with a preset threshold value.

The degree of similarity between the image information obtained from the content provided by the web server and the image information stored beforehand is calculated and compared with the threshold value, to judge whether or not the content has been tampered with. This makes it possible to quantitatively distinguish between a significantly tampered image that greatly changes the viewer's visual impression when viewing the received content in the browser, and a slightly tampered image that hardly changes the viewer's visual impression. By determining an appropriate similarity calculation method and threshold value, the tampering detection accuracy can be improved.

More preferably, the image information storage unit may store, as the image information, frequency components obtained by frequency converting a luminance or a color difference of each pixel included in an image which displays the authorized content, wherein the conversion unit includes: a pixel information conversion unit that converts the content to a luminance or a color difference of each pixel included in an image which displays the content; and a frequency conversion unit that frequency converts the luminance or the color difference of each pixel included in the image which displays the content, to generate frequency components.

According to this structure, the image information obtained from the content provided by the web server and the image information stored beforehand, which serve as a basis for calculating the degree of similarity, are both frequency components. This being so, by comparing coefficients of low frequency components between the two sets of image information, it is possible to detect significant tampering with the content, such as tampering with a screen background or a reference image occupying a large part of a screen, which produces a strong impression on the viewer who acquires and views the content in the browser terminal. As a result, the tampering detection accuracy can be improved.

More preferably, the similarity calculation unit may calculate a sum of absolute values of differences between corresponding frequency components, as the degree of similarity. Also, the similarity calculation unit may calculate a square root of a sum of squares of differences between corresponding frequency components, as the degree of similarity. Furthermore, the similarity calculation unit may calculate a normalized cross-correlation coefficient between corresponding frequency components, as the degree of similarity.

According to these structures, the difference between the two sets of image information is numerically converted. This enables to quantitatively judge whether or not the altered screen corresponds to significant tampering that greatly affects the viewer. Also, the tampering detection accuracy can be improved by selecting a similarity calculation method or combination of similarity calculation methods suitable for tampering detection.

More preferably, the image information storage unit may store, as the image information, a luminance or a color difference of each pixel included in an image which displays the authorized content, wherein the conversion unit converts the content to a luminance or a color difference of each pixel included in an image which displays the content.

According to this structure, the image information obtained from the content provided by the web server and the image information stored beforehand, which serve as a basis for calculating the degree of similarity, are both frequency components. This being so, by comparing coefficients of low frequency components between the two sets of image information, it is possible to detect significant tampering with the content, such as tampering with a screen background or a reference image occupying a large part of a screen, which produces a strong impression on the viewer who acquires and views the content in the browser terminal. As a result, the tampering detection accuracy can be improved.

More preferably, the similarity calculation unit may calculate a sum of absolute values of differences between luminances or color differences of corresponding pixels, as the degree of similarity. Also, the similarity calculation unit may calculate a square root of a sum of squares of differences between luminances or color differences of corresponding pixels, as the degree of similarity. Furthermore, the similarity calculation unit may calculate a normalized cross-correlation coefficient between luminances or color differences of corresponding pixels, as the degree of similarity.

According to these structures, the difference between the two sets of image information is numerically converted. This enables to quantitatively judge whether or not the altered screen corresponds to significant tampering that greatly affects the viewer. Also, the tampering detection accuracy can be improved by selecting a similarity calculation method or combination of similarity calculation methods suitable for tampering detection.

More preferably, the information processing device according to the present invention may further include: a content backup storage unit in which backup data for the content provided by the web server is stored; and a content sending unit that sends, to a browser terminal making an acquisition request for the content, content which is stored in the content backup storage unit and corresponds to the acquisition request, when the tampering judgment unit judges that the content acquired from the web server has been tampered with.

The information processing device according to the present invention has the backup data for the content. Therefore, when tampering is detected, the proper content can be provided by the information processing device according to the present invention to the browser terminal making the acquisition request for the content. This allows the viewer to view the proper content provided by the information processing device according to the present invention, even when the content provided by the web server has been tampered with.

More preferably, the information processing device according to the present invention may further include: an IP address storage unit in which an Internet Protocol (IP) address of the web server corresponding to a domain name is stored; and an IP address responding unit that, in response to the domain name received from a browser terminal, sends an IP address of the information processing device to the browser terminal when the tampering judgment unit judges that the content acquired from the web server has been tampered with, and send the IP address of the web server to the browser terminal when the tampering judgment unit judges that the content acquired from the web server has not been tampered with.

When tampering with the content provided by the web server is detected, the information processing device according to the present invention sends its own ID address in response to the domain name received from the browser terminal. In this way, the backup data stored in the information processing device according to the present invention can be easily provided to the browser terminal. Also, the content can be provided by the information processing device according to the present invention, immediately after the detection of the tampering. This enables the administrator to suppress a time lag from when the tampering is made until when the provision of the proper content becomes possible. Moreover, the viewer can view the proper content without waiting for the recovery from the tampering.

More preferably, the information processing device according to the present invention may further include a tampering notification unit that, when the tampering judgment unit judges that the content acquired from the web server has been tampered with, notifies of the tampering.

According to this structure, when tampering is detected, the information processing device according to the present invention notifies the website administrator or the like of the detection of the tampering. This enables the website administrator or the like to recognize the tampering early.

More preferably, the tampering notification unit may send, to a predetermined electronic mail address, electronic mail to which an image file of an image that displays the authorized content before the tampering in a browser terminal and an image file of an image that displays the tampered content in the browser terminal are attached.

According to this structure, the notification made to the website administrator when the tampering is detected is accompanied by the image files before and after the tampering. Having received the notification of the tampering, the website administrator can compare the tampered image with the proper image. This enables the website administrator to know how much the tampering made by a third party affects the viewer's impression and thereby take an appropriate measure, which contributes to an improvement in content tampering detection accuracy.

More preferably, the information processing device according to the present invention may further include an image information writing unit that writes, to the image information storage unit, the image information generated by the conversion unit converting the content acquired from the web server, when the degree of similarity calculated by the similarity calculation unit is different from a value obtained in a case where the image information generated by the conversion unit completely matches the image information read by the image information reading unit, but is a value based on which the tampering judgment unit judges that the content acquired from the web server has not been tampered with.

According to this structure, in the case where the content provided by the web server to the browser terminal has been altered but that alteration does not correspond to tampering, the image information obtained by converting the content provided by the web server to the browser terminal is stored into the image information storage unit. In this way, when the content provided by the web server to the browser terminal is updated by the administrator, the image information which serves as a basis for judging whether or not the content has been tampered with is automatically updated. This makes it unnecessary to perform maintenance of the image information storage unit. Also, a tampering detection error caused when the storage contents of the image information storage unit are older than the content provided by the web server, can be prevented. Hence the tampering detection accuracy can be improved.

More preferably, the information processing device according to the present invention may further include a backup writing unit that writes the content acquired from the web server to a content backup storage unit, when the degree of similarity calculated by the similarity calculation unit is different from a value obtained in a case where the image information generated by the conversion unit completely matches the image information read by the image information reading unit, but is a value based on which the tampering judgment unit judges that the content acquired from the web server has not been tampered with.

According to this structure, in the case where the content provided by the web server to the browser terminal has been altered but that alteration does not correspond to tampering, the content provided by the web server to the browser terminal is stored into the content backup storage unit. In this way, when the content provided by the web server to the browser terminal is updated by the administrator, the storage contents of the content backup storage unit are automatically updated. This makes it unnecessary to perform maintenance of the content backup storage unit. Also, when providing the storage contents of the content backup storage unit to the browser terminal as a result of tampering being detected, an error of sending pre-update, old information can be prevented.

More preferably, the content acquisition unit may acquire the content from the web server, in response to an acquisition request for the content by a browser terminal.

Detection of whether or not the content provided by the web server has been tampered with is performed in accordance with the acquisition request for the content by the browser terminal. This being so, in the case where the content has been tampered with, the tampering can be detected before the content is sent to the browser terminal.

It should be noted that the present invention can be realized not only as an information processing device including the above characteristic units, but also as an information processing method including steps corresponding to the characteristic units included in the information processing device. Furthermore, the present invention can be realized as a program for causing a computer to execute these steps. Such a program can be distributed via a storage medium such as a Compact Disc - Read Only Memory (CD-ROM) or a communication network such as the Internet.

**Effects of the Invention**

According to the present invention, it is possible to automatically distinguish between significant tampering that greatly changes a visual impression at the time of viewing, and an update or slight tampering that hardly changes the visual impression. As a result, the tampering detection accuracy can be improved.

**Brief Description of Drawings**

FIG. 1 shows a first example of a hardware structure of a content provision system that uses an information processing device according to an embodiment of the present invention.
FIG. 2 is a block diagram showing functional structures of a DNS server and a web server.
FIG. 3 shows a first example of IP address information stored in an IP address storage unit.
FIG. 4 shows a first example of image information stored in an image information storage unit.
FIG. 5 shows a first example of a data structure of image information stored in the image information storage unit.
FIG. 6 shows an example of content information stored in a content storage unit in the web server and a content backup storage unit in the DNS server.
FIG. 7 is a flowchart of a process executed by the DNS server.
FIG. 8 shows a detailed process of image information comparison in Step S2 shown in FIG. 7.
FIG. 9 is a flowchart of a process executed by the web server.
FIG. 10 shows an example of an original screen displayed in a browser terminal.
FIG. 11 shows an example of an updated or slightly tampered screen displayed in the browser terminal.
FIG. 12 shows a first example of a significantly tampered screen displayed in the browser terminal.
FIG. 13 shows a second example of a significantly tampered screen displayed in the browser terminal.
FIG. 14 shows an example of a screen displayed in the browser terminal when a reference image file cannot be found.
FIG. 15 shows an example of image information in the case of frequency conversion.
FIG. 16 shows an example of calculating normalized cross-correlation coefficient R as a degree of similarity.
FIG. 17 shows an example of mail sent to a website administrator.
FIG. 18 shows a second example of a hardware structure of a content provision system.
FIG. 19 shows a second example of IP address information stored in the IP address storage unit.
FIG. 20 shows a third example of a hardware structure of a content provision system.
FIG. 21 shows a third example of IP address information stored in the IP address storage unit.
FIG. 22 shows a second example of image information stored in the image information storage unit.
FIG. 23 shows a second example of a data structure of image information stored in the image information storage unit.
FIG. 24 shows an example of calculating difference absolute value sum S as a degree of similarity.
FIG. 25 shows an example of calculating Euclidean distance D as a degree of similarity.

**Best Mode for Carrying Out the Invention**

The following describes an embodiment of an information processing device according to the present invention, with reference to drawings.

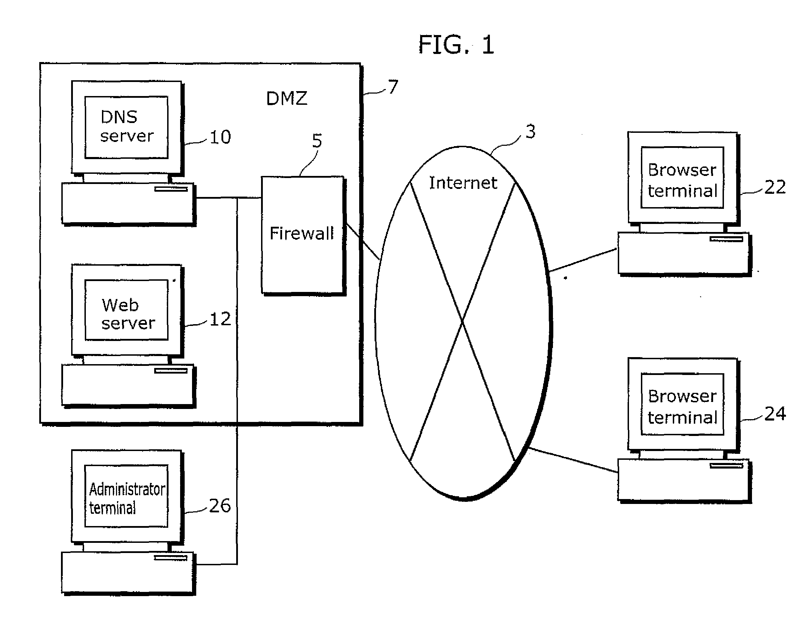

First, a structure of the information processing device according to the present invention is described below, by referring to FIGS. 1 to 6.

FIG. 1 shows a first example of a hardware structure of a content provision system that uses an information processing device according to an embodiment of the present invention. The content provision system is a system for providing and viewing content of a website. As shown in FIG. 1, the content provision system according to this embodiment includes a domain name server (DNS) server 10, a web server 12, an administrator terminal 26, and a plurality of browser terminals 22 and 24 connected via the Internet 3. Typically, the DNS server 10, the web server 12, and the administrator terminal 26 are connected with the Internet 3 via a firewall 5, to prevent unauthorized access from outside. The DNS server 10 and the web server 12 can be accessed, though limitedly, from the browser terminal 22 (24) located outside, for website publishing and mail transmission/reception. Meanwhile, external access to the administrator terminal 26 is in principle prohibited. Thus, in a demilitarized zone (DMZ) 7 that is limitedly accessible from the browser terminal 22 (24) located outside, the DNS server 10 and the web server 12 transfer information with each other.

The DNS server 10 sends, as a response, an IP address corresponding to a domain name sent from the browser terminal 22 (24), and also detects tampering with content which is provided by the web server.

The web server 12 is a server that sends a content file to the browser terminal 22 (24) making an acquisition request for the content file.

Each of the browser terminals 22 and 24 executes a browser. The browser terminal sends the domain name and content file name of the website which are inputted by a viewer to the browser, and also sends an acquisition request for content offered by the corresponding domain. The browser terminal displays the content of the website, which is provided by the web server 12 or the DNS server 10, on a display.

The administrator terminal 26 is a terminal used by an administrator. The administrator terminal 26 is connected to the Internet 3 via the same firewall 5 as the DNS server 10 and the web server 12. The administrator terminal 26 executes mail reception software and, when tampering has been made, receives mail notifying of the tampering.

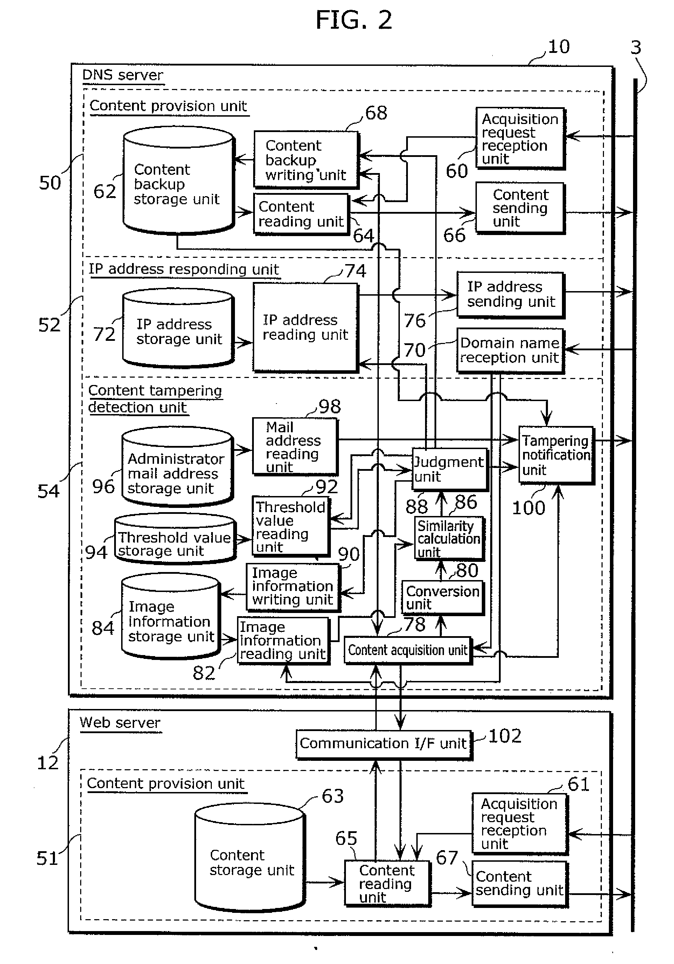

FIG. 2 is a block diagram showing functional structures of the DNS server 10 and the web server 12. The DNS server 10 includes an IP address responding unit 52, a content tampering detection unit 54, and a content provision unit 50. The web server 12 includes a content provision unit 51 and a communication I/F unit 102.

A detailed structure and function of each of the devices included in the DNS server 10 are described first.

The IP address responding unit 52 is a device that, upon receiving the domain name sent from the browser terminal 22 (24), sends an IP address corresponding to the received domain name as a response. The IP address responding unit 52 includes a domain name reception unit 70, an IP address storage unit 72, an IP address reading unit 74, and an IP address sending unit 76.

The domain name reception unit 70 receives the domain name sent from the browser terminal 22 (24). The IP address reading unit 74 in the IP address responding unit 52 according to the present invention instructs the IP address reading unit 74 via the content tampering detection unit 54, to read an IP address of a web server corresponding to the received domain name.

The IP address storage unit 72 stores the domain name, and an IP address of the web server 12 and an IP address of the DNS server 10 corresponding to the domain name. A specific example of information stored in the IP address storage unit 72 will be described later.

The IP address reading unit 74 reads one of the IP addresses stored in the IP address storage unit 72, according to a judgment made by the content tampering detection unit 54 based on the domain name and content file name received by the domain name reception unit 70. For example, when the domain name reception unit 70 in the DNS server that manages domain "p" receives an inquiry "http://p.co.jp/top.html", the IP address reading unit 74 determines whether the IP address of the web server 12 or the IP address of the DNS server 10 is to be read, according to the judgment by the content tampering detection unit 54. When the content tampering detection unit 54 judges that "top.html" of the web server 12 has not been tampered with, the IP address reading unit 74 reads the IP address of the web server 12. When the content tampering detection unit 54 judges that "top.html" of the web server 12 has been tampered with, the IP address reading unit 74 reads the IP address of the DNS server 10.

The IP address sending unit 76 receives the IP address read by the IP address reading unit 74, and sends the received IP address to the browser terminal 22 (24) as a response.

The content tampering detection unit 54 is a device that detects tampering with content provided by the web server 12. The content tampering detection unit 54 is situated between the domain name reception unit 70 and the IP address reading unit 74 of the IP address responding unit 52. In the DNS server 10, the content tampering detection unit 54 includes a content acquisition unit 78, a conversion unit 80, an image information storage unit 84, an image information reading unit 82, a similarity calculation unit 86, a threshold value storage unit 94, a threshold value reading unit 92, a judgment unit 88, an image information writing unit 90, an administrator mail address storage unit 96, a mail address reading unit 98, and a tampering notification unit 100.

The content acquisition unit 78 is a processing unit that receives the content file name received by the domain name reception unit 70, requests the communication I/F unit 102 in the web server 12 to provide the content file corresponding to the received content file name, and acquires the content file from the communication I/F unit 102 in the web server 12.

The conversion unit 80 is a processing unit that analyzes/converts the content file, which is received from the web server 12 via the content acquisition unit 78, to generate image information, and outputs the image information to the similarity calculation unit 86. The image information mentioned here is information showing a characteristic of the content file as an image. For instance, the image information is pixel information such as a luminance or a color difference of each pixel, or a coefficient relating to each frequency component obtained by performing a frequency conversion, such as a discrete Fourier transform or a discrete cosine transform, on the pixel information. In this embodiment, a coefficient (hereafter referred to as a "frequency coefficient") relating to each frequency obtained by discrete cosine transforming the pixel information is used as image information.

The image information storage unit 84 is a storage device that stores proper content to be provided, in the form of image information. Here, the image information stored in the image information storage unit 84 is the same information about an image as the image information generated in the conversion unit 80. It is to be noted however that the image information held in the image information storage unit 84 is image information obtained by the conversion unit 80 performing the conversion process on an authorized content file. Accordingly, when tampering has not been made, the image information outputted from the conversion unit 80 matches the image information stored in the image information storage unit 84. In this embodiment, the conversion unit 80 outputs a frequency coefficient as the image information. Therefore, the image information held in the image information storage unit 84 is a frequency coefficient, too.

For example, the image information held in the image information storage unit 84 is prepared in a manner that the website administrator stores the image information generated by the conversion unit 80 converting the authorized content file, in advance.

The image information reading unit 82 is a processing unit that receives the content file name received by the domain name reception unit 70, and reads the image information corresponding to the content file from the image information storage unit 84.

The similarity calculation unit 86 is a processing unit that compares the image information obtained from the conversion unit 80 with the image information obtained from the image information reading unit 82, and calculates a degree of similarity between the two sets of image information. The degree of similarity can be considered as a value that numerically represents the viewer's impression of the content when viewing the content file in the browser.

The similarity calculation unit 86 calculates, as the degree of similarity, normalized cross-correlation value R between the image information obtained from the web server 12 via the conversion unit 80 and the image information obtained from the image information storage unit 84 via the image information reading unit 82.

Here, let Xi be a frequency coefficient relating to an i-th component of the image information obtained from the web server 12 via the conversion unit 80, Xa be a mean value of Xi, Yi be a frequency coefficient relating to an i-th component of the image information obtained from the image information storage unit 84 via the image information reading unit 82, and Ya be a mean value of Yi. Normalized cross-correlation value R can be calculated according to the following equation (1). Note that n denotes a number of frequency components calculated in the frequency conversion.

[Equation 1]

$$R = \frac{\sum_{i=1}^{n}(X_i - X_a)(Y_i - Y_a)}{\sqrt{\sum_{i=1}^{n}(X_i - X_a)^2}\sqrt{\sum_{i=1}^{n}(Y_i - Y_a)^2}} \quad \cdots (1)$$

The judgment unit 88 is a processing unit that determines, based on the degree of similarity obtained from the similarity calculation unit 86, whether or not the image information obtained from the web server 12 via the conversion unit 80 and the image information obtained from the image information storage unit 84 via the image information reading unit 82 have a difference. When the two sets of image information have a difference, the judgment unit 88 further compares the difference with a threshold value, to judge whether or not the content of the web server has been tampered with.

In the case where normalized cross-correlation value R is used as the degree of similarity, R = 1 if the two sets of image information have no difference and completely match each other. If the two sets of image information have a difference, that is, if R ≠ 1, the judgment unit 88 compares normalized cross-correlation value R obtained from the similarity calculation unit 86, with a preset threshold value. When normalized cross-correlation value R obtained from the similarity calculation unit 86 is greater than the threshold value, the judgment unit 88 judges that tampering has not been made. When normalized cross-correlation value R obtained from the similarity calculation unit 86 is equal to or smaller than the threshold value, the judgment unit 88 judges that tampering has been made.

The threshold value storage unit 94 is a storage device that stores the aforementioned threshold value of the degree of similarity, which represents a limit of the difference between image data.

The threshold value reading unit 92 is a processing unit that reads information from the threshold value storage unit 94, when requested by the judgment unit 88.

The tampering notification unit 100 is a processing unit that sends mail to the administrator when the judgment unit 88 judges that tampering has been made.

The content provision unit 50 is a device that sends content to the browser terminal 22 (24), when receiving an acquisition request for the content from the browser terminal 22 (24). The content provision unit 50 includes an acquisition request reception unit 60, a content backup storage unit 62, a content reading unit 64, a content sending unit 66, and a content backup writing unit 68.

The acquisition request reception unit 60 receives the acquisition request for the content from the browser terminal 22 (24).

The content backup storage unit 62 is a backup of the content file which the web server 12 provides to the browser terminal 22 (24) making the acquisition request.

The content reading unit 64 reads the content file corresponding to the acquisition request, from the content backup storage unit 62.

The content sending unit 66 receives the content file read by the content reading unit 64, and sends the received content file to the browser terminal 22 (24) making the acquisition request.

The content backup writing unit 68 performs the following process. When the content file which the web server 12 provides to the browser terminal 22 (24) making the acquisition request has been updated or slightly tampered with, that is, when the judgment unit 88 judges that the image information obtained from the web server 12 via the conversion unit 80 and the image information obtained from the image information storage unit 84 via the image information reading unit 82 have a difference but tampering has not been made, the content backup writing unit 68 acquires the content from the content acquisition unit 78 and writes the storage contents of a content storage unit 63 in the web server 12 over the storage contents of the content backup storage unit 62.. By doing so, the update of the content file in the content storage unit 63 in the web server 12 is automatically reflected on the storage contents of the content backup storage unit 62.

A detailed structure and function of each of the devices included in the web server 12 are described next. The web server 12 includes the content provision unit 51 and the communication I/F unit 102.

The communication I/F unit 102, when requested by the content acquisition unit 78, sends a corresponding content file to the content acquisition unit 78.

The content provision unit 51 is a device that sends content to the browser terminal 22 (24), when receiving an acquisition request for the content from the browser terminal 22 (24). The content provision unit 51 includes an acquisition request reception unit 61, the content storage unit 63, a content reading unit 65, and a content sending unit 67.

The acquisition request reception unit 61 receives the acquisition request for the content from the browser terminal 22 (24).

The content reading unit 65 reads the content file corresponding to the acquisition request, from the content storage unit 63.

The content sending unit 67 receives the content file read by the content reading unit 65, and sends the received content file to the browser terminal 22 (24) making the acquisition request. The content storage unit 63 stores the content file to be sent to the browser terminal 22 (24) making the acquisition request. This content file stored in the content storage unit 63 is sent to the browser terminal 22 (24) making the acquisition request for the content file, unless the content file has been tampered with.

Thus, the difference between the content provision unit 50 in the DNS server 10 and the content provision unit 51 in the web server 12 lies in that the content provision unit 50 operates when tampering is detected, whereas the content provision unit 51 operates when tampering is not detected.

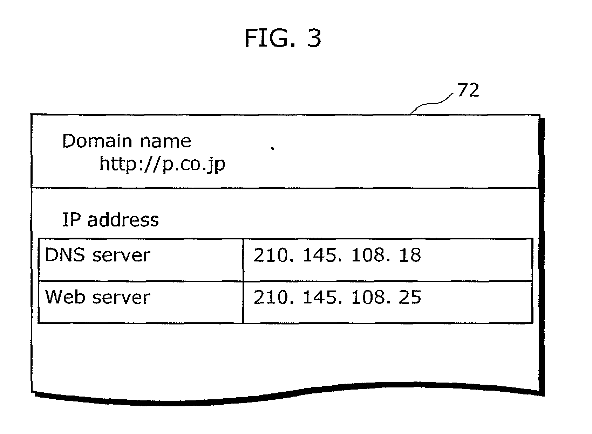

FIG. 3 shows a first example of IP address information stored in the IP address storage unit 72. The IP address of the DNS server 10 and the IP address of the web server 12 are stored in correspondence with the domain name sent from the viewer. As one example, the IP address "210.145.108.18" of the DNS server 10 and the IP address "210.145.108.25" of the web server 12 are stored for the domain name "http://p.co.jp". The IP address reading unit 74 reads the IP address "210.145.108.25" of the web server 12 when the judgment unit 88 judges that tampering has not been made, and reads the IP address "210.145.108.18" of the web server when tampering has not been made. In both cases, the IP address read by the IP address reading unit 74 is sent to the browser terminal 22 (24) making the acquisition request for the content file, as a response. Having received the response, the browser terminal 22 (24) acquires the content file from the server corresponding to the IP address.

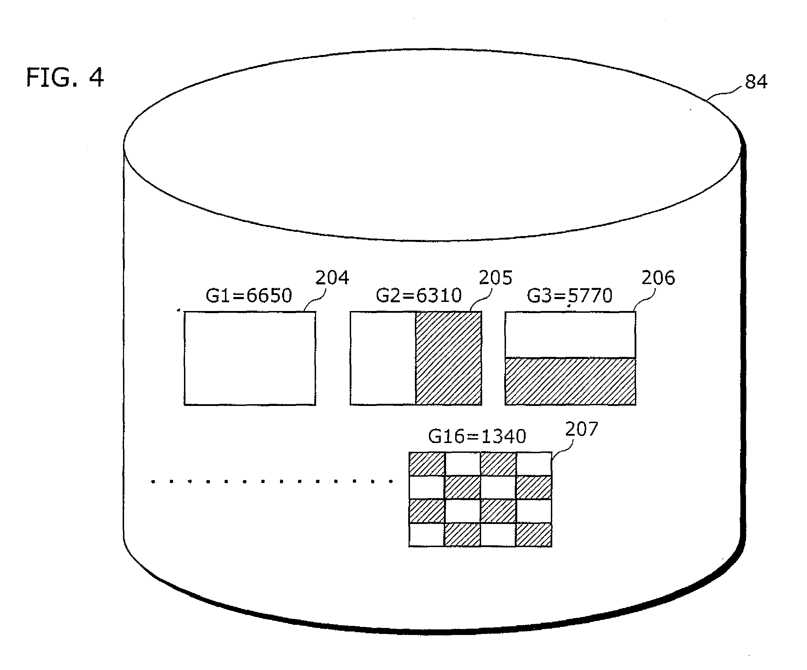

FIG. 4 shows a first example of image information stored in the image information storage unit 84. The image information storage unit 84 stores image information obtained by analyzing/converting each proper content file to be provided on the Internet 3. In this embodiment, image information G1 to G16 show frequency coefficients generated by discrete cosine transforming pixel information which is obtained as a result of analyzing a content file.

FIG. 4 shows screen images 204, 205, 206, ... , 207 each corresponding to a different frequency component, and coefficients G1, G2, G3, ... , G16 relating respectively to the frequency components 204, 205, 206, ... , 207. G1 represents the coefficient of the first frequency component 204, G2 represents the coefficient of the second frequency component 205, G3 represents the coefficient of the third frequency component 206, and G16 represents the coefficient of the sixteenth frequency component 207. The first frequency component 204 having a lowest frequency is a component that is uniform across one screen. The second frequency component 205 having a second lowest frequency is a component that divides the screen into left and right halves with inverted luminances. The third frequency component 206 is a component that divides the screen into top and bottom halves with inverted luminances. Following this, the frequency increases gradually. In this embodiment, the sixteenth frequency component is a highest frequency component. The sixteenth frequency component 207 is a component that divides the screen into 4 x 4 blocks where adjacent blocks alternate in luminance.

By performing such a frequency conversion, it is possible to detect tampering with a screen background, which is considered to produce a strong impression on the viewer of the website. This is because the tampering with the background causes a considerable change of a coefficient relating to a low frequency component.

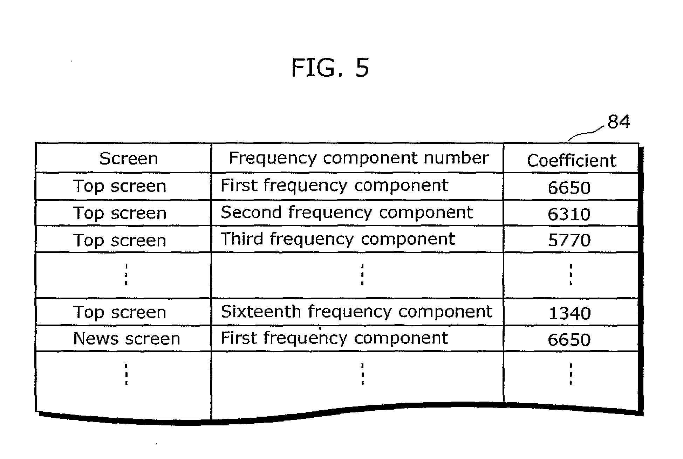

FIG. 5 shows a first example of a data structure of image information stored in the image information storage unit 84. A frequency component and a frequency coefficient are stored for each screen.

For example, suppose the browser terminal 22 (24) makes an acquisition request for a content file of a top screen. The similarity calculation unit 86 in the content tampering detection unit 54 calculates normalized cross-correlation coefficient R, by using frequency coefficients of first to sixteenth frequency components obtained by analyzing/converting the content file of the top screen obtained from the content storage unit 63, and the frequency coefficients of the top screen shown in FIG. 5, namely, the frequency coefficient "6650" of the first frequency component, the frequency coefficient "6310" of the second frequency component, the frequency coefficient "5770" of the third frequency component, ... , to the frequency coefficient "1340" of the sixteenth frequency component.

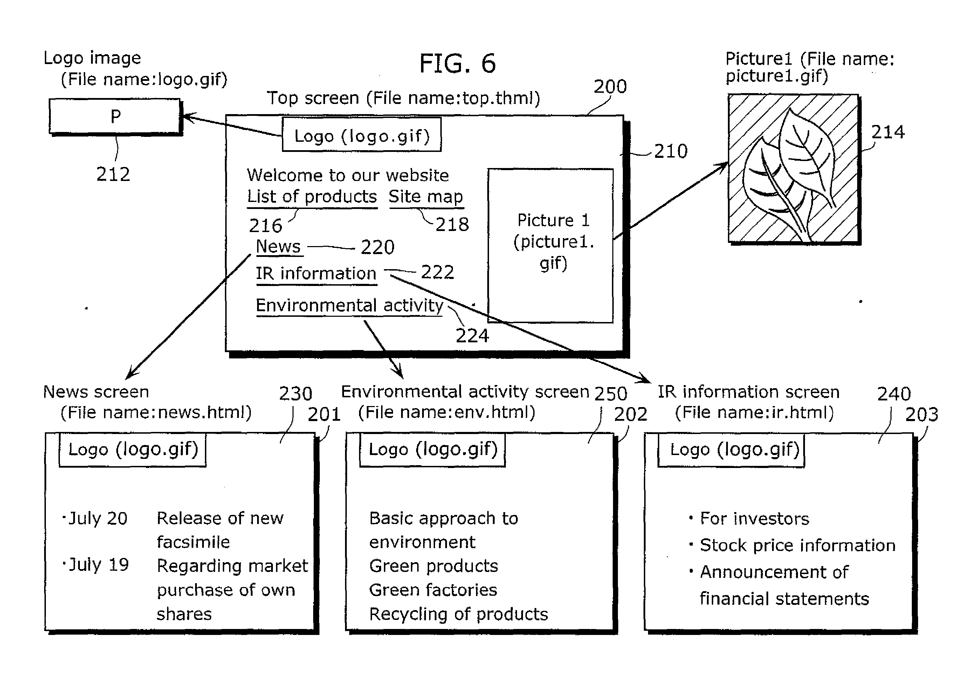

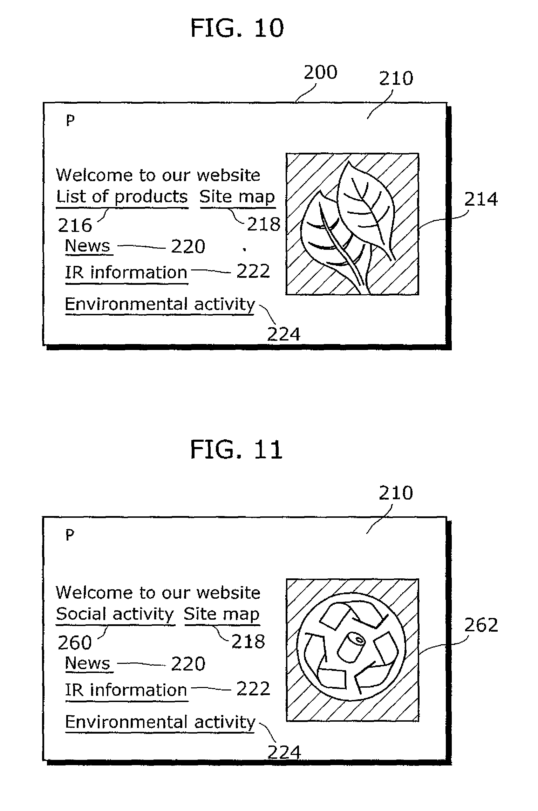

FIG. 6 shows an example of content information stored in the content storage unit 63 in the web server 12 and the content backup storage unit 62 in the DNS server 10. The content storage unit 63 and the content backup storage unit 62 store content files such as a Hyper Text Markup Language (HTML) file and a Graphic Interchange Format (GIF) file. In FIG. 6, files such as "top.html", "news.html", "ir.html", "env.html", "logo.gif", and "picture1.gif" are content files. Since "top.html" refers to "logo.gif" and "picture1.gif", "top.html" is displayed in a state where these content files are referred to, in the browser that receives "top.html" (FIG. 10). When displayed in the browser of the browser terminal 22 (24), some word, image, and the like on the screen may provide a link to other content files. A link is provided from an underlined word in FIG. 6. Clicking the word enables the linked file to be viewed. In FIG. 6, links are placed from "list of products" 216, "site map" 218, "news" 220, "IR information" 222, and "environmental activity" 224 on the screen where "top.html" is displayed in the browser. In detail, the "news" 220 is linked to "news.html", the "IR information" 222 is linked to "ir.html", and the "environmental activity" 224 is linked to "env.html". Also, "logo.gif", which is a file storing a logo image 212, is referred to not only by "top.html" but also by "news.html", "ir.html", and "env.html".

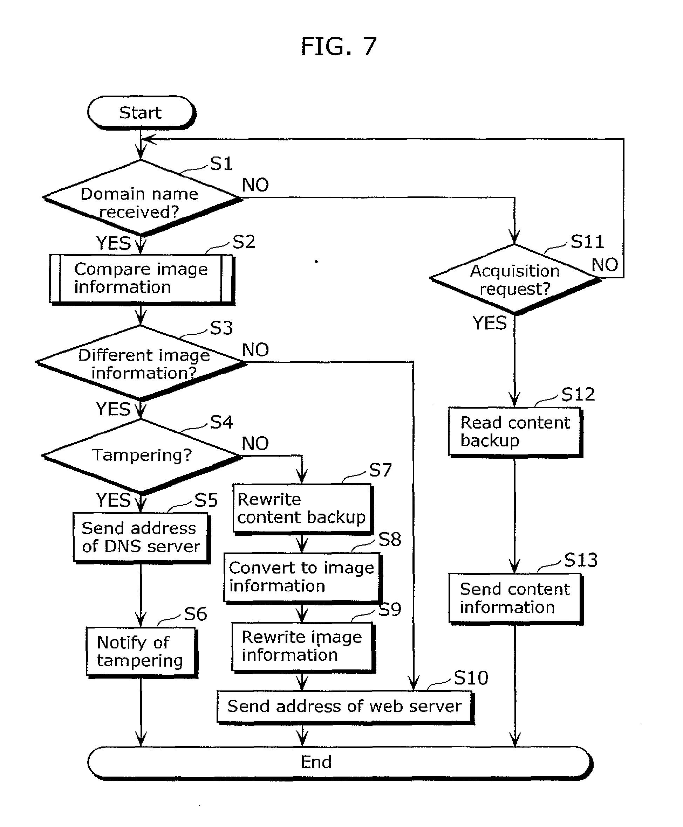

The following describes processes executed by the DNS server 10 and the web server 12, with reference to FIGS. 7 to 9.

FIG. 7 is a flowchart of the process executed by the DNS server 10.

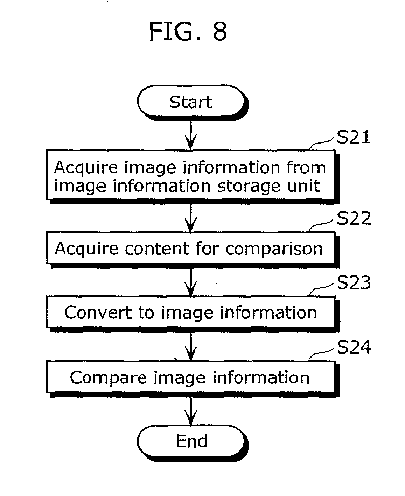

The domain name reception unit 70 monitors whether or not a domain name and a content file name are received in the DNS server 10 (Step S1). When the domain name reception unit 70 receives the domain name (Step S1: YES), the similarity calculation unit 86 performs a comparison process (Step S2). The comparison process is a process of comparing image information obtained by converting a content file stored in the content storage unit 63 in the web server 12 with image information stored in the image information storage unit 84, and calculating a degree of similarity between the two sets of image information. Normalized cross-correlation value R is used as the degree of similarity. The comparison process will be described in detail later, by referring to FIG. 8. When no difference is found between the image information obtained from the content storage unit 63 in the web server 12 and the image information stored in the image information storage unit 84, that is, when normalized cross-correlation value R = 1 (Step S3: NO), the IP address sending unit 76 sends the IP address of the web server 12 as a response (Step S10), and ends the process.

When a difference is found between the image information obtained from the content storage unit 63 in the web server 12 and the image information stored in the image information storage unit 84, that is, when normalized cross-correlation value $R \neq 1$ (Step S3: YES), the judgment unit 88 compares a degree of the difference, i.e., normalized cross-correlation value R, with the preset threshold value (Step S4).

When the judgment unit 88 judges that the content held in the content storage unit 63 has been tampered with, that is, when normalized cross-correlation value R is equal to or smaller than the threshold value (Step S4: YES), the IP address sending unit 76 sends the IP address of the DNS server 10 as a response (Step S5). Following this, the tampering notification unit 100 sends mail notifying of the detection of the tampering to the administrator (Step S6), and ends the process.

When the judgment unit 88 judges that the content held in the content storage unit 63 has not been tampered with, that is, when normalized cross-correlation value R is greater than the threshold value (Step S4: NO), the content backup writing unit 68 writes the storage contents of the content storage unit 63 in the web server 12 over the storage contents of the content backup storage unit 62 (Step S7). Furthermore, the conversion unit 80 converts the content file stored in the content storage unit 63 in the web server 12, to image information (Step S8). The image information writing unit 90 writes this image information to the image information storage unit 84 (Step S9). After this, the IP address sending unit 76 sends the IP address of the web server 12 as a response (Step S10), and ends the process.

In the case where the domain name reception unit 70 does not receive the domain name (Step S1: NO) but the acquisition request reception unit 60 in the DNS server 10 receives an acquisition request for the content file (Step S11: YES), the content reading unit 64 in the DNS server 10 reads the storage contents of the content backup storage unit 62 (Step S12). The content sending unit 66 sends the read information to the browser terminal 22 (24) (Step S13), and ends the process.

FIG. 8 shows details of the image information comparison process in Step S2 shown in FIG. 7. This process is executed in the content tampering detection unit 54. The image information reading unit 82 reads the image information of the content file from the image information storage unit 84, with reference to the content file name received by the domain name reception unit 70 (Step S21). Also, the content acquisition unit 78 acquires the content file stored in the content storage unit 63 in the web server 12 via the communication I/F unit 102, with reference to the content file name received by the domain name reception unit 70 (Step S22). Following this, the conversion unit 80 converts the acquired content file to image information (Step S23). Lastly, the similarity calculation unit 86 compares the image information obtained by converting the information acquired from the content storage unit 63 with the image information read from the image information storage unit 84, and calculates the degree of similarity (Step S24).

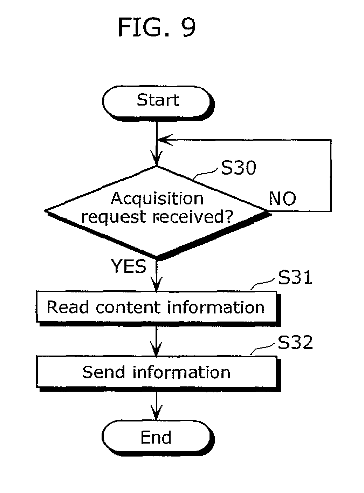

FIG. 9 is a flowchart of the process executed by the web server 12. The acquisition request reception unit 60 monitors whether or not an acquisition request for a content file is received in the web server 12 (Step S30). When the acquisition request for the content file is not received (Step S30: NO), the acquisition request reception unit 60 keeps monitoring whether or not the acquisition request for the content file is received.

When the acquisition request reception unit 60 receives the acquisition request for the content file (Step S30: YES), the content reading unit 65 reads the content file corresponding to the acquisition request, from the content storage unit 63 (Step S31). After this, the content sending unit 67 sends the read content file to the browser terminal 22 (24) (Step S32), and ends the process.

Example screens displayed in the browser, an example procedure of comparison and judgment on these screens, and an example notification sent when tampering is detected are described in detail below, with reference to FIGS. 10 to 17.

FIG. 10 shows an example of an original screen which is displayed in the browser terminal. This original screen is an example screen where a content file stored in the content backup storage unit 62 in the DNS server 10 and the content storage unit 63 in the web server 12 is displayed in the browser terminal 22 (24), and corresponds to a screen which is displayed in the browser when the browser terminal 22 (24) receives "top.html" shown in FIG. 6.

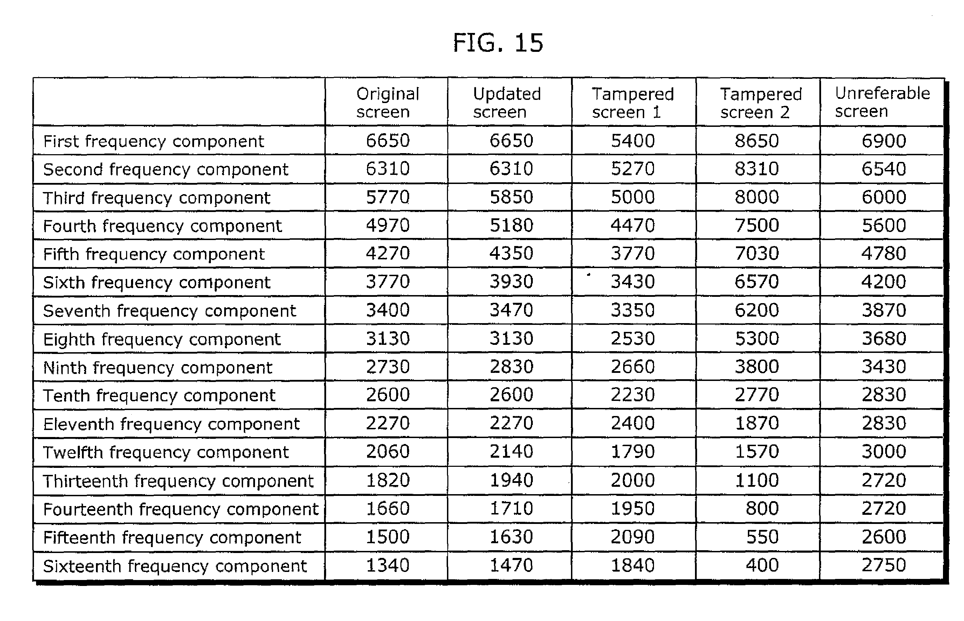

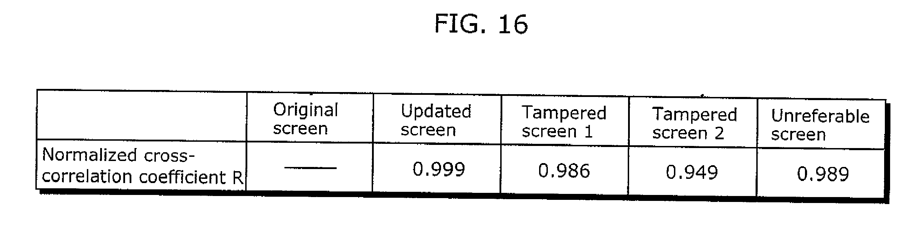

FIG. 11 shows an example of an updated or slightly tampered screen which is displayed in the browser terminal. The difference from the original screen shown in FIG. 10 lies in that the "list of products" 216, which is one of the linked titles, is changed to "social activity" 260, and that the illustration image is changed from "leaf illustration" 214 on a gray background to "recycle illustration" 262 on a gray background. Though these changes have been made, they only cause an insignificant difference in the viewer's visual impression, because an image background 210 is the same white background as the original screen shown in FIG. 16, the change of the linked title is a minor change, and the background of the illustration remains the same gray background and also the picture design has a similar luminance. Therefore, the content tampering detection unit 54 according to the present invention does not judge this as tampering. A procedure of making such a judgment regarding FIG. 11 will be described later by using specific values, with reference to FIGS. 15, 16, 24, and 25.

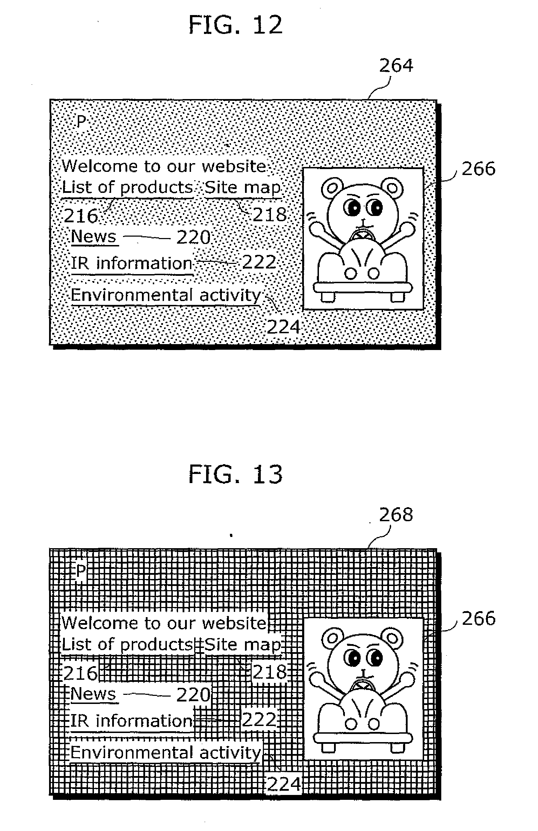

FIG. 12 shows a first example of a significantly tampered screen which is displayed in the browser terminal. The difference from the original screen shown in FIG. 10 lies in that the illustration image is changed from the "leaf illustration" 214 on a gray background to "bear and car illustration" 266 on a white background, and that the screen background is changed from the white background 210 to a gray background 264. In addition to the change of the illustration image which causes a considerable difference in luminance of the corresponding part, the change of the screen background is significant tampering that greatly affects the viewer's impression. Therefore, the content tampering detection unit 54 according to the present invention judges this as tampering. A procedure of making such a judgment regarding FIG. 12 will be described later in detail by using specific values, with reference to FIGS. 15, 16, 24, and 25.

FIG. 13 shows a second example of a significantly tampered screen which is displayed in the browser terminal.

The difference from the original screen shown in FIG. 10 lies in that the illustration image is changed from the "leaf illustration" 214 on a gray background to the "bear and car illustration" 266 on a white background, and that the screen background is changed from the white background 210 to a grid pattern 268. In addition to the change of the illustration image which causes a considerable difference in luminance of the corresponding part, the change of the screen background is significant tampering that greatly affects the viewer's impression, as in the case of the tampering shown in FIG. 12. Therefore, the content tampering detection unit 54 according to the present invention judges this as tampering. A procedure of making such a judgment regarding FIG. 13 will be described in detail later by using specific values, with reference to FIGS. 15, 16, 24, and 25.

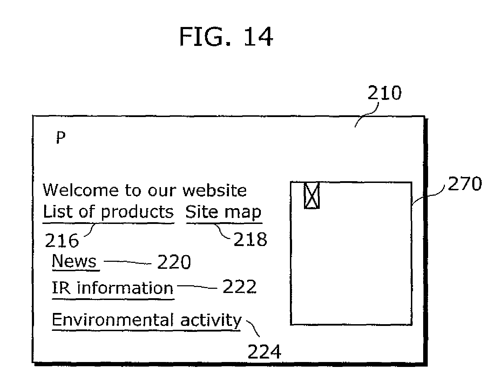

FIG. 14 shows an example screen which is displayed in the browser terminal when a reference image file cannot be found. The difference from the original screen shown in FIG. 10 lies in that, because the illustration image 214 cannot be referred to properly, an unreferable picture display 270 appears instead. As one example, the unreferable picture display 270 is an image where the illustration part is entirely white and a small cross mark fit within a box is placed in the upper left corner. Thus, the reference part where the image is supposed to be displayed is entirely white, which is a considerable change from the original image 214 having a gray background. Such an image change is significant tampering that greatly affects the viewer's impression. It should be noted that, since such unreferability of a file can also occur due to an update error by the administrator, the present invention is effective for detecting an update error, too. A procedure of making such a judgment regarding FIG. 14 will be described in detail later by using specific values, with reference to FIGS. 15, 16, 24, and 25.

FIG. 15 shows an example of image information in the case of frequency conversion. FIG. 15 shows a list of coefficients of first to sixteenth frequency components, which are calculated by frequency converting luminances of each of the screens shown in FIGS. 10 to 14. The procedure of how the information processing device according to the present invention judges whether or not tampering has been made is described below, by using the specific values shown in FIG. 15.

An "original screen" column shows each frequency coefficient obtained by frequency converting the original screen shown in FIG. 10. These coefficients obtained by frequency converting the original screen are stored in the image information storage unit 84. An "updated screen" column shows each frequency coefficient obtained by frequency converting the updated or slightly tampered screen shown in FIG. 11. A "tampered screen 1" column shows each frequency coefficient obtained by frequency converting the significantly tampered screen shown in FIG. 12. A "tampered screen 2" column shows each frequency coefficient obtained by frequency converting the significantly tampered screen shown in FIG. 13. An "unreferable screen" column shows each frequency coefficient obtained by frequency converting the significantly tampered screen shown in FIG. 14. The coefficients obtained by frequency converting each of the updated screen, the tampered screen 1, the tampered screen 2, and the unreferable screen are calculated by the conversion unit 80 processing the corresponding content file acquired from the content storage unit 63 in the web server 12.

FIG. 16 shows an example of calculating normalized cross-correlation coefficient R as a degree of similarity. The similarity calculation unit 86 calculates the degree of similarity between the image information stored in the image information storage unit 84 and the image information obtained by the conversion unit 80 converting the content file stored in the content storage unit 63 in the web server 12. Following this, the judgment unit 88 judges whether or not tampering has been made, by comparing the degree of similarity calculated by the similarity calculation unit 86 with the threshold value. Normalized cross-correlation coefficient R is used as the degree of similarity. Consider the case of calculating normalized cross-correlation coefficient R between the original screen and each of the updated screen, the tampered screen 1, the tampered screen 2, and the unreferable screen, using the frequency coefficients shown in FIG. 15. R = 0.999 in the case of the updated screen, R = 0.986 in the case of the tampered screen 1, R = 0.949 in the case of the tampered screen 2, and R = 0.989 in the case of the unreferable screen. Suppose the threshold value is set to 0.99. The judgment unit 88 judges that tampering has not been made when the calculated normalized cross-correlation coefficient is greater than 0.99, and judges that tampering has been made when the calculated normalized cross-correlation coefficient is equal to or smaller than 0.99. In the case of the updated screen, R = 0.999. Accordingly, the judgment unit 88 judges that tampering has not been made. In the case of the tampered screen 1, the tampered screen 2, and the unreferable screen, R = 0.986, R = 0.949, and R = 0.989 respectively, all of which do not exceed the threshold value of 0.99. Accordingly, the judgment unit 88 judges that tampering has been made.

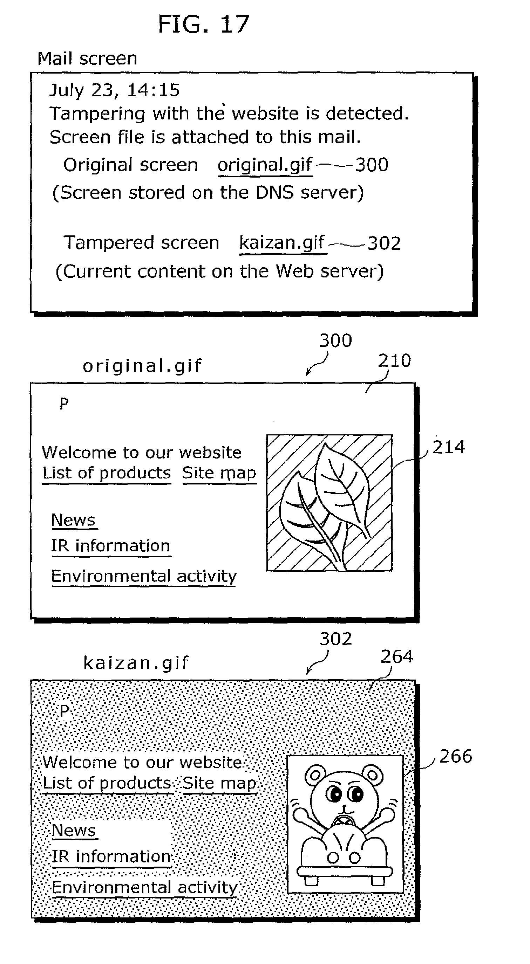

FIG. 17 shows an example of mail sent to the website administrator. When the content tampering detection unit 54 detects that the website has been tampered with, the tampering notification unit 100 notifies the website administrator that the tampering is detected, by mail. The mail includes a message indicating the detection of the tampering, and a date and time of the detection of the tampering. In addition, for a web page that has been tampered with, an image file 300 of the original screen before the tampering and an image file 302 of the tampered screen are attached to the mail. Here, the image file 300 of the original screen before the tampering is a file obtained by converting the content file stored in the content backup storage unit 62 to an image. The tampering notification unit 100 reads this content file from the content backup storage unit 62, and generates the image file 300 of the original screen before the tampering.

Meanwhile, the image file 302 of the tampered screen is a file obtained by converting the content file stored in the content storage unit 63 in the web server 12 to an image. The tampering notification unit 100 receives this tampered content file from the content acquisition unit 78, and generates the image file 302 of the tampered screen.

As described above, according to this embodiment, the content file is sent from the communication I/F unit 102 in the web server 12 to the content tampering detection unit 54. This makes it possible to check in real time whether or not the content file, which is provided to the browser terminal 22 (24) making an acquisition request for the content file, has been tampered with.

Also, according to this embodiment, tampering detection is performed based on the image information of the content. This being so, the judgment of whether or not the content has been tampered with can be performed based on how much the viewer's visual impression changes when viewing the content. This makes it possible to detect only significant tampering that causes a considerable change in visual impression. Hence the tampering detection accuracy can be improved.

Also, when tampering is detected, the content tampering detection unit 54 notifies the website administrator of the detection of the tampering. This allows the website administrator to recognize the tampering early.

Moreover, according to this embodiment, the DNS server 10 can also function as a web server and, when tampering is detected, sends its own the IP address as the IP address corresponding to the domain name. As a result, when tampering is detected, the authorized content can be provided to the viewer even during a period from immediately after the tampering to the recovery from the tampering.

Although the information processing device according to the present invention has been described by way of the above embodiment, the present invention should not be limited to the above.

Variations are applicable to each of the system structure, the image information type, and the similarity calculation method for realizing the present invention.

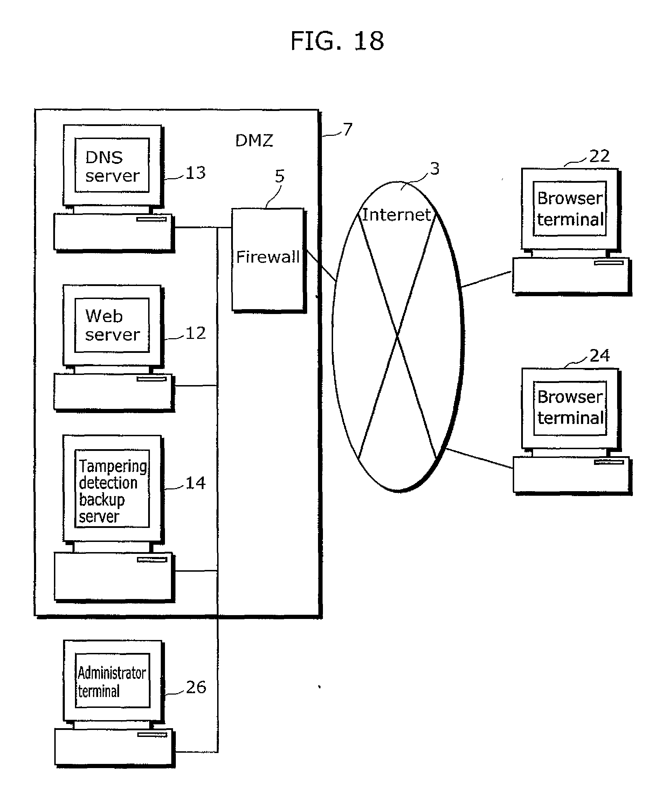

First, variations relating to the system structure are described below, by referring to FIGS. 18 to 21.

FIG. 18 shows a second example of a hardware structure of a content provision system that uses an information processing device according to an embodiment of the present invention. In FIG. 18, components which are the same as those in FIG. 1 have been given the same reference numerals.

The DNS server 10 in the above embodiment includes the content tampering detection unit 54 and the content provision unit 50, in addition to the IP address responding unit 52. However, the content tampering detection unit 54 and the content provision unit 50 may be provided in a server other than the DNS server 10. In view of this, the following structures (1) to (5) are applicable in addition to the structure shown in FIG. 1, depending on which device is included in the DNS server.

(1) The DNS server includes the IP address sending unit 76 and the content tampering detection unit 54, and a backup server other than the DNS server includes the content provision unit 50. This backup server operates as a web server, only when the content file provided by the web server 12 has been tampered with.

(2) The DNS server includes the IP address sending unit 76 and the content provision unit 50, and a tampering detection server other than the DNS server includes the content tampering detection unit 54.

(3) The DNS server 13 includes the IP address sending unit 76, and a tampering detection backup server 14 other than the DNS server 13 includes the content provision unit 50 and the content tampering detection unit 54. The content provision unit 50 in the tampering detection backup server provides content, only when the content file provided by the web server 12 has been tampered with.

(4) The DNS server 13 includes the IP address responding unit 52, a backup server 18 other than the DNS server 13 includes the content provision unit 50, and a tampering detection server 16 other than the DNS server 13 and the backup server 18 includes the content tampering detection unit 54. The backup server 16 operates as a web server, only when the content file provided by the web server 12 has been tampered with.

(5) Each of the structures (1) to (4) may further be provided with one or more backup servers.

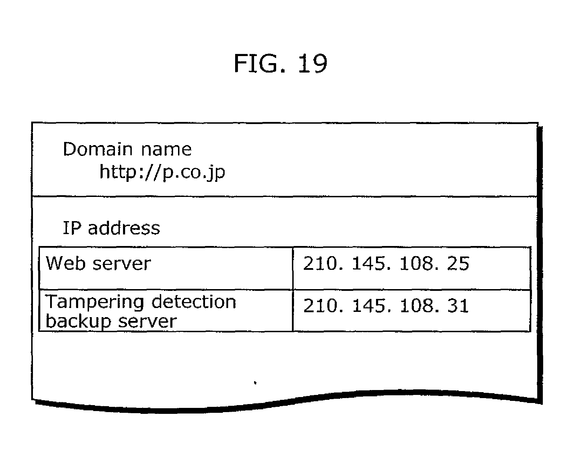

In the example structure shown in FIG. 18, the DNS server 13 includes the IP address responding unit 52, the web server 12 includes the content provision unit 51, and the tampering detection backup server 14 includes the content tampering detection unit 54 and the content provision unit 50. Even when the structure is changed in such a way, the functional block of each device is the same as that shown in FIG. 2. In the case of adding the tampering detection backup server 14, however, the storage contents of the IP address storage unit 72 change. This is explained below with reference to FIG. 19.

FIG. 19 shows a second example of IP address information stored in the IP address storage unit. This example represents the storage contents of the IP address storage unit in the case (FIG. 18) where the tampering detection backup server 14 is added to the structure shown in FIG. 1. The IP address of the web server 12 and an IP address of the tampering detection backup server 14 are stored in correspondence with the domain name sent from the viewer. For example, the IP address "210.145.108.25" of the web server 12 and the IP address "210.145.108.31" of the tampering detection backup server 14 are stored for the domain name "http://p.co.jp".

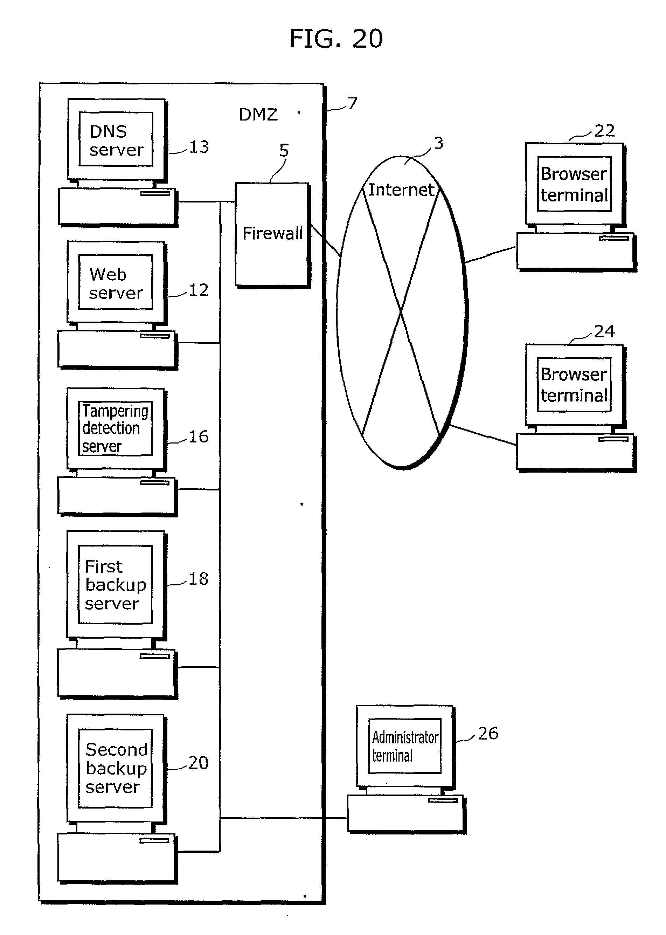

FIG. 20 shows a third example of a hardware structure of a content provision system that uses an information processing device according to an embodiment of the present invention. This example represents a hardware structure in which one backup server 20 is further added to the structure (4) according to the above (5). In FIG. 20, components which are the same as those in FIG. 18 have been given the same reference numerals.

The difference between the structure shown in FIG. 20 and the structure shown in FIG. 18 lies in that the tampering detection server 16, the first backup server 18, and the second backup server 20 are provided. The tampering detection server 16 includes the content tampering detection unit 54, whereas the first backup server 18 and the second backup server 20 each include the content provision unit 50.

The first backup server 18 and the second backup server 20 are arranged in an order in which they operate as a web server when tampering with the content file provided by the web server 12 to the browser terminal 22 (24) is detected. The second backup server 20 operates when both the content file provided by the web server 12 to the browser terminal 22 (24) and the content file provided by the first backup server 18 to the browser terminal 22 (24) have been tampered with. In detail, when tampering with the storage contents of the content storage unit 63 in the web server 12 is detected, the first backup server 18 operates as a server for providing the content to the browser terminal 22 (24). When tampering with the storage contents of the content storage unit 63 in the web server 12 and tampering with the storage contents of a first content backup storage unit (not illustrated) in the first backup server 18 are detected, the second backup server 20 operates as a server for providing the content to the browser terminal 22 (24).

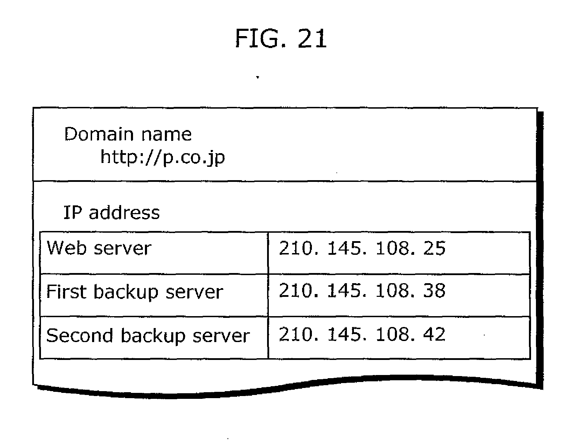

Even when the structure is changed in such a way, the functional block of each device is the same as that shown in FIG. 2. In the case of adding the backup server 18 (20) which operates as a web server when the content file provided by the web server 12 has been tampered with, however, the storage contents of the IP address storage unit 72 change. This is explained below with reference to FIG. 21.

FIG. 21 shows a third example of IP address information stored in the IP address storage unit 72. This example concerns the case where the first backup server 18 and the second backup server 20 are provided as components. The IP address of the web server 12, an IP address of the first backup server 18, and an IP address of the second backup server 20 are stored in correspondence with the domain name sent from the viewer. For example, the IP address "210.145.108.25" of the web server 12, the IP address "210.145.108.38" of the first backup server 18, and the IP address "210.145.108.42" of the second backup server 20 are stored for the domain name "http://p.co.jp".

Note here that, in the case where only one backup server is added to the structure shown in FIG. 1, the storage contents of the IP address storage unit 72 have a data structure obtained by deleting the information of the second backup server 20 from the example shown in FIG. 7.

In the case where a plurality of backup servers are provided, the tampering detection process may be performed a plurality of times. In detail, tampering detection is first performed on the storage contents of the content storage unit 63 in the web serer 12. When tampering is not detected, the IP address sending unit 76 sends the IP address of the web server 12 as a response. When tampering is detected, on the other hand, tampering detection is further performed on the storage contents of the first content backup storage unit in the first backup server 18. When tampering is not detected in the storage contents of the first content backup storage unit, the IP address sending unit 76 sends the IP address of the first backup server 18 as a response. When tampering is detected in the storage contents of the first content backup storage unit, the IP address sending unit 76 sends the IP address of the second backup server 20 as a response.

According to these variations relating to the system structure, it is possible to check in real time whether or not the content file, which is provided to the browser terminal 22 (24) making an acquisition request for the content file, has been tampered with. Also, when tampering is detected, the website administrator is notified of the detection of the tampering. This allows the website administrator to recognize the tampering early. Moreover, when tampering is detected, the authorized content can be provided to the viewer even during a period from immediately after the tampering to the recovery from the tampering. Furthermore, by providing a plurality of content provision units 50 each including the content backup storage unit 62, the content can be provided on the Internet 3 more stably.

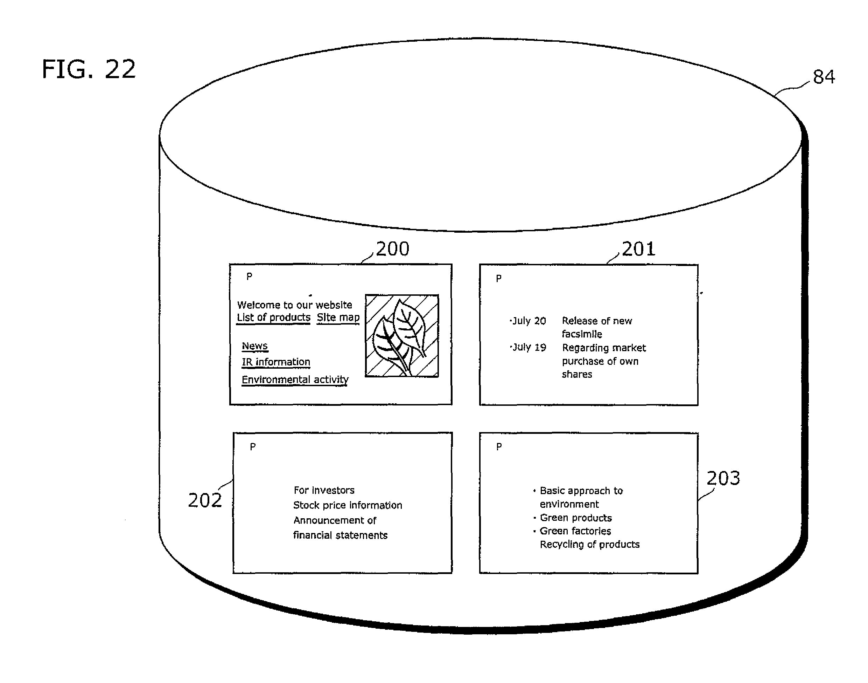

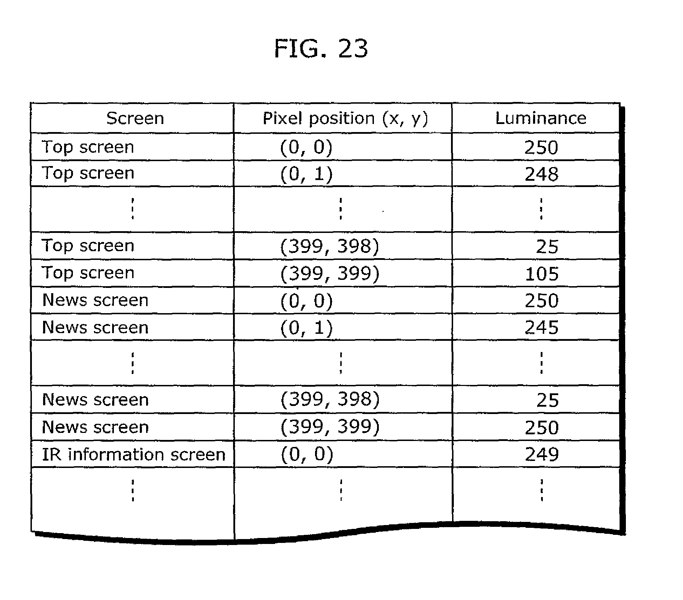

Next, variations relating to the image information type are described below, with reference to FIGS. 22 and 23.

FIG. 22 shows a second example of image information stored in the image information storage unit 84.

The image information is information stored in the image information storage unit 84, and also information obtained by the conversion unit 80 analyzing/converting a content file stored in the content storage unit 63. These information serve as basic information for the comparison and tampering judgment process by the similarity calculation unit 86 and the judgment unit 88. The image information used here may be information obtained by discrete cosine transforming pixel information, or information obtained by performing a frequency conversion such as a discrete Fourier transform on the pixel information. As an alternative, the image information may be the pixel information itself. Which is to say, a luminance or a color difference of each pixel itself may be used for the comparison and tampering judgment process.

FIG. 22 shows an image of information stored in the image information storage unit 84 in the case where pixel information is used as image information. The top screen 200, the news screen 201, the IR information screen 202, and the environmental activity screen 203 are each a screen where the corresponding content file stored in the content storage unit 63 or the content backup storage unit 62 is displayed in the browser. The image information storage unit 84 holds pixel information of these screens.

FIG. 23 shows a second example of a data structure of image information stored in the image information storage unit 84. FIG. 23 shows a specific structure of data stored in the image information storage unit 84, in the case where the image information storage unit 84 holds pixel information, i.e., a luminance or a color difference of each screen, as image information as shown in FIG. 22.

In the example shown in FIG. 23, a total number of pixels of each screen is 400 x 400, and a luminance of each pixel is stored for each of the top screen 200, the news screen 201, and the IR information screen 202. In the top screen 200, a luminance of a pixel located at (0, 0) is 250, a luminance of a pixel located at (0, 1) is 248, a luminance of a pixel located at (399, 398) is 25, and a luminance of a pixel located at (399, 399) is 105. In the news screen 201, a luminance of a pixel located at (0, 0) is 250, a luminance of a pixel located at (0, 1) is 245, a luminance of a pixel located at (399, 398) is 25, and a luminance of a pixel located at (399, 399) is 250. In the IR information screen 202, a luminance of a pixel located at (0, 0) is 249. The image information storage unit 84 further stores a luminance of each pixel up to (399, 399) of the IR information screen, and a luminance of each pixel of other screens, as image information.

It is to be noted here that, since the comparison and judgment process by the similarity calculation unit 86 and the judgment unit 88 involves the comparison between the image information stored in the image information storage unit 84 and the image information outputted from the conversion unit 80, the two sets of image information need to be of a same type. For instance, in the case where the image information storage unit 84 stores a luminance of each pixel when a content file is displayed in the browser, the image information outputted from the conversion unit 88 is a luminance of each pixel of the content file, too.

The above describes the case where the pixel information is used as image information. The following describes an additional variation relating to the case of using image information obtained by frequency converting the pixel information. In the above example that uses the frequency conversion, the first to sixteenth frequency components are the frequency components calculated by a discrete cosine transform. However, any predetermined frequency components may be used as image information. For example, the first frequency component to a higher frequency component, such as the thirty-second frequency component, may be used. Also, a plurality of frequency component groups, such as a group of the first to fifth frequency components and a group of the twenty-eighth to thirty-second frequency components, may be used. Furthermore, inconsecutive frequency components, such as odd-numbered frequency components among the first to fifteenth frequency components, may be used.

The following describes an additional variation relating to the type of image information stored in the image information storage unit 84. The above describes the case where only one type of image information is stored in the image information storage unit 84. However, the image information stored in the image information storage unit 84 is not limited to one type, as two or more types of image information are selectable. For instance, three types of image information, namely, a luminance of a screen, frequency coefficients of the first to sixteenth frequency components obtained by a discrete cosine transform, and frequency coefficients of the thirty-second to forty-eighth frequency components obtained by a discrete cosine transform, may be used.

The above describes the case where the image information storage unit 84 holds, for each screen, image information obtained by the conversion unit 80 converting an authorized content file. As an additional variation, the image information storage unit 84 may instead hold one set of image information common to a plurality of screens, or one set of image information common to all screens.

In these three additional variations too, since the comparison and judgment process by the similarity calculation unit 86 and the judgment unit 88 involves the comparison between the image information stored in the image information storage unit 84 and the image information outputted from the conversion unit 88, the two sets of image information need to be comparable with each other.

As a result of selecting one or more types of image information described above, the tampering detection accuracy can be improved.

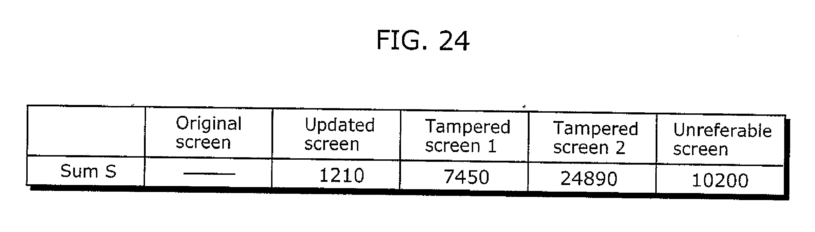

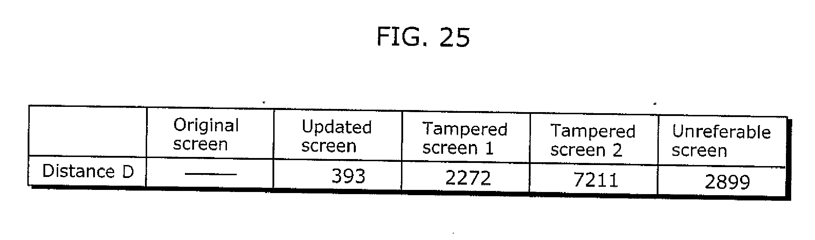

Lastly, variations relating to the similarity calculation method are described below, with reference to FIGS. 24 and 25. As mentioned earlier, the degree of similarity is calculated by the similarity calculation unit 86 using the image information stored in the image information storage unit 84 and the image information obtained by the conversion unit 80 converting the content file stored in the content storage unit 63 in the web server 12, and numerically represents the viewer's impression of the content upon viewing the content file in the browser. The degree of similarity calculated by the similarity calculation unit 86 serves as an indicator that is compared with the threshold value by the judgment unit 88 to judge whether or not the content has been tampered with.

The degree of similarity is not limited to normalized cross-correlation coefficient R. For example, the degree of similarity may also be difference absolute value sum S, Euclidean distance D, or the like.

FIG. 24 shows an example of calculating difference absolute value sum S as the degree of similarity.

Let $X_i$ be a frequency coefficient of an i-th component of the image information obtained from the web server 12 via the conversion unit 80, and $Y_i$ be a frequency coefficient of an i-th component of the image information obtained from the image information storage unit 84 via the image information reading unit 82. This being the case, difference absolute value sum S can be calculated according to the following equation (2). Here, n denotes a number of frequency components calculated in the frequency conversion.

[Equation 2]

$$S = \sum_{i=1}^{n} |X_i - Y_i| \qquad \cdots\cdots (2)$$

In the case where difference absolute value sum S is used as the degree of similarity, S = 0 when the image information obtained by the conversion unit 80 converting the content file stored in the content storage unit 63 in the web server 12 completely matches the image information stored in the image information storage unit 84. When the two sets of image information have a difference, that is, when S ≠ 0, on the other hand, the judgment unit 88 compares difference absolute value sum S obtained from the similarity calculation unit 86 with a preset threshold value, to judge whether or not tampering has been made. When difference absolute value sum S obtained from the similarity calculation unit 86 is greater than the threshold value, the judgment unit 88 judges that tampering has been made. When difference absolute value sum S obtained from the similarity calculation unit 86 is equal to or smaller than the threshold value, the judgment unit 88 judges that tampering has not been made.

In FIG. 24, difference absolute value sum S is calculated for each screen, using the frequency coefficients shown in FIG. 15 as image information. Consider the case of calculating difference absolute value sum S between the original screen and each of the updated screen, the tampered screen 1, the tampered screen 2, and the unreferable screen using the coefficient of each frequency component, that is, the sum of absolute values of differences between coefficients of corresponding frequency components. S = 1210 in the case of the updated screen, S = 7450 in the case of the tampered screen 1, S = 24980 in the case of the tampered screen 2, and S = 10200 in the case of the unreferable screen. None of the screens completely matches the original screen. Accordingly, the tampering detection process is performed next. Suppose the threshold value is set to 5000. The judgment unit 88 judges that tampering has been made when calculated difference absolute value sum S is greater than 5000, and judges that tampering has not been made when difference absolute value sum S is equal to or smaller than 5000. In the case of the updated screen, S = 1210, which does not exceed 5000. Therefore, the judgment unit 88 judges that tampering has not been made. In the case of the tampered screen 1, the tampered screen 2, and the unreferable screen, S = 7450, R = 24890, and R = 10200 respectively, all of which exceed the threshold value of 5000. Therefore, the judgment unit 88 judges that tampering has been made.

FIG. 25 shows an example of calculating Euclidean distance D as the degree of similarity.

Euclidean distance D is a square root of a sum of squares of differences between corresponding components. Consider the case of using a frequency coefficient as image information. Let Xi be a frequency coefficient of an i-th component of the image information obtained from the web server 12 via the conversion unit 80, and Yi be a frequency coefficient of an i-th component of the image information obtained from the image information storage unit 84 via the image information reading unit 82. This being the case, Euclidean distance D can be calculated according to the following equation (3). Here, n denotes a number of frequency components calculated in the frequency conversion.

[Equation 3]

$$D = \sqrt{\sum_{i=1}^{n} (X_i - Y_i)^2} \qquad \cdots\cdots (3)$$

In the case where Euclidean distance D is used as the degree of similarity, D = 0 when the image information obtained by the conversion unit 80 converting the content file stored in the content storage unit 63 in the web server 12 completely matches the image information stored in the image information storage unit 84. When the two sets of image information have a difference, that is, when D ≠ 0, on the other hand, the judgment unit 88 compares Euclidean distance D obtained from the similarity calculation unit 86 with a preset threshold value, to judge whether or not tampering has been made. When Euclidean distance D obtained from the similarity calculation unit 86 is greater than the threshold value, the judgment unit 88 judges that tampering has been made. When Euclidean distance D obtained from the similarity calculation unit 86 is equal to or smaller than the threshold value, the judgment unit 88 judges that tampering has not been made.

In FIG. 25, Euclidean distance D is calculated for each screen, by using the frequency coefficients shown in FIG. 15 as image information. Consider the case of calculating difference absolute value sum S between the original screen and each of the updated screen, the tampered screen 1, the tampered screen 2, and the unreferable screen using the coefficient of each frequency component. D = 393 in the case of the updated screen, D = 2272 in the case of the tampered screen 1, D = 7211 in the case of the tampered screen 2, and D = 2899 in the case of the unreferable screen. None of the screens completely matches the original screen. Accordingly, the tampering detection process is performed next. Suppose the threshold value is set to 1500. The judgment unit 88 judges that tampering has been made when Euclidean distance D is greater than 1500, and judges that tampering has not been made when Euclidean distance D is equal to or smaller than 1500. In the case of the updated screen, D = 393, which does not exceed 1500. Therefore, the judgment unit 88 judges that tampering has not been made. In the case of the tampered screen 1, the tampered screen 2, and the unreferable screen, D = 2272, D = 7211, and D = 2899 respectively, all of which exceed the threshold value of 1500. Therefore, the judgment unit 88 judges that tampering has been made.

It should be noted that the similarity calculation method is not limited to one method, and a plurality of calculation methods may be used to judge whether or not tampering has been made. For instance, normalized cross-correlation coefficient R and Euclidean distance D may be used together.

By selecting one or more similarity calculation methods described above, the tampering detection accuracy can be improved.

**Industrial Applicability**

The present invention is applicable to an information processing device and the like that are capable of early detection of tampering with content published on the Internet, and early recovery from tampering.

**Claims**

1. An information processing device that detects tampering with content which is provided by a web server via the Internet, said information processing device comprising:

    a content acquisition unit operable to acquire the content from the web server, the content being written in a predetermined language;
    a conversion unit operable to convert the content acquired by said content acquisition unit, to image information that shows a characteristic of the content as an image;
    an image information storage unit in which image information obtained by performing the same conversion as said conversion unit on authorized content corresponding to the content is stored;
    an image information reading unit operable to read the image information corresponding to the content acquired by said content acquisition unit, from said image information storage unit; and
    a tampering judgment unit operable to judge whether or not the content acquired from the web server has been tampered with, by comparing the image information generated by said conversion unit and the image information read by said image information reading unit.

2. The information processing device according to Claim 1,
    wherein said tampering judgment unit includes:

    a similarity calculation unit operable to calculate a degree of similarity between the image information generated by said conversion unit and the image information read by said image information reading unit; and
    a judgment unit operable to judge whether or not the content acquired from the web server has been tampered with, based on a result of comparing the degree of similarity with a preset threshold value.

3. The information processing device according to Claim 1,
    wherein said image information storage unit stores, as the image information, frequency components obtained by frequency converting a luminance or a color difference of each pixel included in an image which displays the authorized content, and
said conversion unit includes:

> a pixel information conversion unit operable to convert the content to a luminance or a color difference of each pixel included in an image which displays the content; and
> a frequency conversion unit operable to frequency convert the luminance or the color difference of each pixel included in the image which displays the content, to generate frequency components.

**4.** The information processing device according to Claim 3, wherein said similarity calculation unit is operable to calculate a sum of absolute values of differences between corresponding frequency components, as the degree of similarity.

**5.** The information processing device according to Claim 3, wherein said similarity calculation unit is operable to calculate a square root of a sum of squares of differences between corresponding frequency components, as the degree of similarity.

**6.** The information processing device according to Claim 3, wherein said similarity calculation unit is operable to calculate a normalized cross-correlation coefficient between corresponding frequency components, as the degree of similarity.

**7.** The information processing device according to Claim 2, wherein said image information storage unit stores, as the image information, a luminance or a color difference of each pixel included in an image which displays the authorized content, and said conversion unit is operable to convert the content to a luminance or a color difference of each pixel included in an image which displays the content.

**8.** The information processing device according to Claim 7, wherein said similarity calculation unit is operable to calculate a sum of absolute values of differences between luminances or color differences of corresponding pixels, as the degree of similarity.

**9.** The information processing device according to Claim 7, wherein said similarity calculation unit is operable to calculate a square root of a sum of squares of differences between luminances or color differences of corresponding pixels, as the degree of similarity.

**10.** The information processing device according to Claim 7, wherein said similarity calculation unit is operable to calculate a normalized cross-correlation coefficient between luminances or color differences of corresponding pixels, as the degree of similarity.

**11.** The information processing device according to Claim 2, further comprising an image information writing unit operable to write, to said image information storage unit, the image information generated by said conversion unit converting the content acquired from the web server, when the degree of similarity calculated by said similarity calculation unit is different from a value obtained in a case where the image information generated by said conversion unit completely matches the image information read by said image information reading unit, but is a value based on which said tampering judgment unit judges that the content acquired from the web server has not been tampered with.

**12.** The information processing device according to Claim 2, further comprising a backup writing unit operable to write the content acquired from the web server to a content backup storage unit, when the degree of similarity calculated by said similarity calculation unit is different from a value obtained in a case where the image information generated by said conversion unit completely matches the image information read by said image information reading unit, but is a value based on which said tampering judgment unit judges that the content acquired from the web server has not been tampered with.

**13.** The information processing device according to Claim 1, further comprising:

> a content backup storage unit in which backup data for the content provided by the web server is stored; and
> a content sending unit operable to send, to a browser terminal making an acquisition request for the content, content which is stored in said content backup storage unit and corresponds to the acquisition request, when said tampering judgment unit judges that the content acquired from the web server has been tampered with.

14. The information processing device according to Claim 1, further comprising:

an IP address storage unit in which an Internet Protocol (IP) address of the web server corresponding to a domain name is stored; and
an IP address responding unit operable to, in response to the domain name received from a browser terminal, send an IP address of said information processing device to the browser terminal when said tampering judgment unit judges that the content acquired from the web server has been tampered with, and send the IP address of the web server to the browser terminal when said tampering judgment unit judges that the content acquired from the web server has not been tampered with.

15. The information processing device according to Claim 1, further comprising
a tampering notification unit operable to, when said tampering judgment unit judges that the content acquired from the web server has been tampered with, notify of the tampering.

16. The information processing device according to Claim 15,
wherein said tampering notification unit is operable to send, to a predetermined electronic mail address, electronic mail to which an image file of an image that displays the authorized content before the tampering in a browser terminal and an image file of an image that displays the tampered content in the browser terminal are attached.

17. The information processing device according to Claim 1,
wherein said content acquisition unit is operable to acquire the content from the web server, in response to an acquisition request for the content by a browser terminal.

18. A tampering detection method for detecting tampering with content which is provided by a web server via the Internet, said tampering detection method comprising:

a content acquisition step of acquiring the content from the web server, the content being written in a predetermined language;
a conversion step of converting the content acquired in said content acquisition step, to image information that shows a characteristic of the content as an image;
an image information reading step of reading, from a storage unit in which image information obtained by performing the same conversion as said conversion step on authorized content corresponding to the content is stored, the image information corresponding to the content acquired in said content acquisition step; and
a tampering judgment step of judging whether or not the content acquired from the web server has been tampered with, by comparing the image information generated in said conversion step and the image information read in said image information reading step.

19. A program for detecting tampering with content which is provided by a web server via the Internet, said program causing a computer to execute:

a content acquisition step of acquiring the content from the web server, the content being written in a predetermined language;
a conversion step of converting the content acquired in said content acquisition step, to image information that shows a characteristic of the content as an image;
an image information reading step of reading, from a storage unit in which image information obtained by performing the same conversion as said conversion step on authorized content corresponding to the content is stored, the image information corresponding to the content acquired in said content acquisition step; and
a tampering judgment step of judging whether or not the content acquired from the web server has been tampered with, by comparing the image information generated in said conversion step and the image information read in said image information reading step.

FIG. 1

EP 1 942 435 A1

# FIG. 2

# FIG. 3

72

| Domain name http://p.co.jp | |
|---|---|
| IP address | |
| DNS server | 210. 145. 108. 18 |
| Web server | 210. 145. 108. 25 |

FIG. 4

FIG. 5

84

| Screen | Frequency component number | Coefficient |
|---|---|---|
| Top screen | First frequency component | 6650 |
| Top screen | Second frequency component | 6310 |
| Top screen | Third frequency component | 5770 |
| ⋮ | ⋮ | ⋮ |
| Top screen | Sixteenth frequency component | 1340 |
| News screen | First frequency component | 6650 |
| ⋮ | ⋮ | ⋮ |

FIG. 6

Logo image (File name:logo.gif)

P — 212

Top screen (File name:top.thml) — 200, 210

Logo (logo.gif)

Welcome to our website
List of products  Site map — 218
216
News — 220
IR information — 222
Environmental activity — 224

Picture 1 (picture1.gif)

Picture1 (File name: picture1.gif) — 214

News screen (File name:news.html) — 230, 201

Logo (logo.gif)

· July 20   Release of new facsimile
· July 19   Regarding market purchase of own shares

Environmental activity screen 250 (File name:env.html) — 202

Logo (logo.gif)

Basic approach to environment
Green products
Green factories
Recycling of products

IR information screen 240 (File name:ir.html) — 203

Logo (logo.gif)

· For investors
· Stock price information
· Announcement of financial statements

# FIG. 7

```
                    ┌─────────┐
                    │  Start  │
                    └────┬────┘
                         │ ◄──────────────────────────────────────┐
                      ╱──┴──╲  S1                                  │
                    ╱ Domain name ╲ ──── NO ──────────────┐        │
                    ╲  received?  ╱                        │        │
                      ╲───┬───╱                            ▼        │
                     YES  │        S2                   ╱──┴──╲ S11 │
                    ┌─────┴──────┐              ╱ Acquisition ╲─ NO ┘
                    │ Compare image │          ╲   request?  ╱
                    │ information  │            ╲────┬───╱
                    └─────┬──────┘                YES │
                      ╱───┴───╲  S3                    │      S12
                    ╱ Different image ╲─ NO       ┌─────┴──────┐
                    ╲ information?  ╱ ──────┐     │ Read content │
                      ╲───┬───╱              │     │ backup     │
                     YES  │       S4         │     └─────┬──────┘
                      ╱───┴───╲              │           │
                    ╱ Tampering? ╲── NO ──┐  │           │      S13
                    ╲─────────╱           ▼  │     ┌─────┴──────┐
                     YES │    S5    ┌──────┴──┐│   │ Send content │
                    ┌─────┴──────┐  │ Rewrite  ││   │ information │
                    │ Send address │ │ content backup│└─────┬──────┘
                    │ of DNS server│ └─────┬────┘│         │
                    └─────┬──────┘        │ S8   │         │
                          │         ┌─────┴──────┐│        │
                          │         │ Convert to image ││   │
                          │ S6      │ information │ │    │
                    ┌─────┴──────┐  └─────┬────┘ S9│    │
                    │ Notify of │        │         │    │
                    │ tampering │   ┌─────┴──────┐  │    │
                    └─────┬──────┘  │ Rewrite image │ │    │
                          │         │ information │ │    │
                          │         └─────┬────┘ S10│   │
                          │    ┌──────────┴──────────┐ │
                          │    │ Send address of web server │
                          │    └──────────┬──────────┘
                          ▼               ▼              ▼
                    ┌──────────────────────────────────────┐
                    │                  End                  │
                    └──────────────────────────────────────┘
```

# FIG. 8

```
        ┌─────────────┐
        │    Start    │
        └──────┬──────┘
               │              ⤶S21
               ▼
  ┌────────────────────────────┐
  │ Acquire image information from │
  │ image information storage unit │
  └──────────────┬─────────────┘
                 │            ⤶S22
                 ▼
  ┌────────────────────────────┐
  │ Acquire content for comparison │
  └──────────────┬─────────────┘
                 │            ⤶S23
                 ▼
  ┌────────────────────────────┐
  │  Convert to image information  │
  └──────────────┬─────────────┘
                 │            ⤶S24
                 ▼
  ┌────────────────────────────┐
  │   Compare image information    │
  └──────────────┬─────────────┘
                 │
                 ▼
        ┌─────────────┐
        │     End     │
        └─────────────┘
```

# FIG. 9

Start

S30
Acquisition request received?
NO
YES

S31
Read content information

S32
Send information

End

# FIG. 10

200 210

P

Welcome to our website
List of products  Site map

216  218

News ——— 220  .

IR information ——— 222

Environmental activity

224

214

# FIG. 11

210

P

Welcome to our website
Social activity  Site map

260  218

News ——— 220

IR information ——— 222

Environmental activity

224

262

# FIG. 12

264

P

Welcome to our website
List of products Site map
216 218
News ——— 220
IR information ——222
Environmental activity
224

266

# FIG. 13

268

P

Welcome to our website
List of products Site map
216 218
News ——— 220
IR information 222
Environmental activity
224

266

# FIG. 14

P

Welcome to our website
List of products   Site map
216                 218
News ——— 220
IR information ——— 222
Environmental activity
224

210
270

## FIG. 15

| | Original screen | Updated screen | Tampered screen 1 | Tampered screen 2 | Unreferable screen |
|---|---|---|---|---|---|
| First frequency component | 6650 | 6650 | 5400 | 8650 | 6900 |
| Second frequency component | 6310 | 6310 | 5270 | 8310 | 6540 |
| Third frequency component | 5770 | 5850 | 5000 | 8000 | 6000 |
| Fourth frequency component | 4970 | 5180 | 4470 | 7500 | 5600 |
| Fifth frequency component | 4270 | 4350 | 3770 | 7030 | 4780 |
| Sixth frequency component | 3770 | 3930 | 3430 | 6570 | 4200 |
| Seventh frequency component | 3400 | 3470 | 3350 | 6200 | 3870 |
| Eighth frequency component | 3130 | 3130 | 2530 | 5300 | 3680 |
| Ninth frequency component | 2730 | 2830 | 2660 | 3800 | 3430 |
| Tenth frequency component | 2600 | 2600 | 2230 | 2770 | 2830 |
| Eleventh frequency component | 2270 | 2270 | 2400 | 1870 | 2830 |
| Twelfth frequency component | 2060 | 2140 | 1790 | 1570 | 3000 |
| Thirteenth frequency component | 1820 | 1940 | 2000 | 1100 | 2720 |
| Fourteenth frequency component | 1660 | 1710 | 1950 | 800 | 2720 |
| Fifteenth frequency component | 1500 | 1630 | 2090 | 550 | 2600 |
| Sixteenth frequency component | 1340 | 1470 | 1840 | 400 | 2750 |

EP 1 942 435 A1

FIG. 16

| | Original screen | Updated screen | Tampered screen 1 | Tampered screen 2 | Unreferable screen |
|---|---|---|---|---|---|
| Normalized cross-correlation coefficient R | ——— | 0.999 | 0.986 | 0.949 | 0.989 |

EP 1 942 435 A1

# FIG. 17

Mail screen

July 23, 14:15
Tampering with the website is detected.
Screen file is attached to this mail.

　Original screen　original.gif ——300
(Screen stored on the DNS server)


　Tampered screen　kaizan.gif ——302
(Current content on the Web server)

original.gif　　300　210

P

Welcome to our website
List of products　Site map

News
IR information
Environmental activity

214

kaizan.gif　　302　264

P

Welcome to our website
List of products　Site map

News
IR information
Environmental activity

266

33

EP 1 942 435 A1

# FIG. 18

34

## FIG. 19

| Domain name<br>    http://p.co.jp | |
|---|---|
| IP address | |
| Web server | 210. 145. 108. 25 |
| Tampering detection<br>backup server | 210. 145. 108. 31 |

# FIG. 20

# FIG. 21

| Domain name<br>    http://p.co.jp | |
|---|---|
| IP address | |
| Web server | 210. 145. 108. 25 |
| First backup server | 210. 145. 108. 38 |
| Second backup server | 210. 145. 108. 42 |

FIG. 22

EP 1 942 435 A1

# FIG. 23

| Screen | Pixel position (x, y) | Luminance |
|---|---|---|
| Top screen | (0, 0) | 250 |
| Top screen | (0, 1) | 248 |
| ⋮ | ⋮ | ⋮ |
| Top screen | (399, 398) | 25 |
| Top screen | (399, 399) | 105 |
| News screen | (0, 0) | 250 |
| News screen | (0, 1) | 245 |
| ⋮ | ⋮ | ⋮ |
| News screen | (399, 398) | 25 |
| News screen | (399, 399) | 250 |
| IR information screen | (0, 0) | 249 |
| ⋮ | ⋮ | ⋮ |

FIG. 24

| | Original screen | Updated screen | Tampered screen 1 | Tampered screen 2 | Unreferable screen |
|---|---|---|---|---|---|
| Sum S | —— | 1210 | 7450 | 24890 | 10200 |

## FIG. 25

| | Original screen | Updated screen | Tampered screen 1 | Tampered screen 2 | Unreferable screen |
|---|---|---|---|---|---|
| Distance D | ——— | 393 | 2272 | 7211 | 2899 |

## INTERNATIONAL SEARCH REPORT

| International application No. |
|---|
| PCT/JP2006/320339 |

| A. CLASSIFICATION OF SUBJECT MATTER |
|---|
| *G06F21/24*(2006.01)i, *G06T7/00*(2006.01)i |

According to International Patent Classification (IPC) or to both national classification and IPC

| B. FIELDS SEARCHED |
|---|
| Minimum documentation searched (classification system followed by classification symbols) |
| G06F21/24, G06T7/00 |

| Documentation searched other than minimum documentation to the extent that such documents are included in the fields searched |
|---|
| Jitsuyo Shinan Koho             1922-1996   Jitsuyo Shinan Toroku Koho   1996-2006 |
| Kokai Jitsuyo Shinan Koho    1971-2006   Toroku Jitsuyo Shinan Koho   1994-2006 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2005-011061 A  (NEC Fielding Ltd.),<br>13 January, 2005 (13.01.05),<br>Full text; all drawings<br>(Family: none) | 1-19 |
| A | JP 2001-309149 A  (Fuji Photo Film Co., Ltd.),<br>02 November, 2001 (02.11.01),<br>Full text; all drawings<br>(Family: none) | 1-19 |
| A | JP 2004-078545 A  (Hitachi, Ltd.),<br>11 March, 2004 (11.03.04),<br>Full text; all drawings<br>(Family: none) | 1-19 |

| ☐ Further documents are listed in the continuation of Box C. | ☐ See patent family annex. |
|---|---|

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search<br>15 December, 2006 (15.12.06) | Date of mailing of the international search report<br>26 December, 2006 (26.12.06) |
|---|---|
| Name and mailing address of the ISA/<br>Japanese Patent Office | Authorized officer |
| Facsimile No. | Telephone No. |

Form PCT/ISA/210 (second sheet) (April 2005)

**EP 1 942 435 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003167786 A